# EUROPEAN PATENT APPLICATION

(11) **EP 3 518 145 A1**
(43) Date of publication of application: **31.07.2019**
(21) Application number: 19154050.9
(22) Date of filing: 28.01.2019
(51) Int. Cl.: G06K 9/00, G06K 9/62

(54) **COGNITIVE INDEXING OF IMAGES IN DIGITAL VIDEO CONTENT**

(30) Priority: 30.01.2018 US 201815884145
(71) Applicant: Deluxe Entertainment Services Group Inc., Burbank, CA 91504 (US)
(72) Inventor: Boonmee, Marvin, Torrance, CA California 90505 (US); Henriques, Weyron, Pasadena, CA California 91104 (US)
(74) Representative: Wallin, Nicholas James

(57) **Abstract**

A method for indexing and cognitively labeling image elements from a plurality of video frames is implemented in a special purpose computer system. Video files are ingested and stored on a storage device within the computer system. The video files comprise the plurality of video frames. A subset of the video frames indicative of substantial motion in context with adjacent video frames is identified. The subset of the video frames is separated as a sample data set. The subset of video frames is filtered to identify discrete image elements within the video frames. The image elements are segmented from the video frames in the subset. A multi-dimensional feature vector is calculated for each image element. The feature vectors are clustered based upon similarities in feature vector values. The clusters of feature vectors are processed with a support vector classifier machine to refine clusters into predicted classes.

## Description

### TECHNICAL FIELD

The technology described herein relates to the use of machine intelligence to identify and tag objects in digital video content.

### BACKGROUND

Digital content covers a broad spectrum of entertainment and non-entertainment visual products.

Digital content created during the making of entertainment based motion pictures, television episodes, commercials, non-scripted entertainment, news gathering and documentaries, are commonly referred to as dailies. The name arises from standard practices in the motion picture industry. Usually at the end of each day footage is digitally or chemically processed for viewing by the content creators and other stake holders of the production process. Dailies reflect the progress of the overall production. The term can also be used to refer to any raw footage, regardless of when it is processed or how it was captured.

Viewing dailies allows the production stakeholders to see and hear exactly what was captured the previous day, allowing them to identify technical problems such as digital sensor defects, lens aberration, lighting irregularities, or other anomalies that affect integrity of the images, or physical continuity errors that may affect the purpose of the footage. Dailies also allow the creators to review and approve talent performances and ensure that a scene has been appropriately covered from all necessary camera angles. If additional shooting is required it can often be determined immediately rather than re-shooting days later when sets, locations or talent may no longer be available.

Dailies are also often viewed separately by stakeholders who are not directly involved in day-to-day production but seek assurance that the production meets the expectations of investors. Additionally, dailies footage may be used by producers to support marketing efforts in parallel with the actual production. These efforts may include promotion of a finished movie, television episode, commercial, or other type of visual product that may tie in with a specific event, or marketing cause.

When using digital video cameras, image and sound are often recorded simultaneously to hard drives in a format that can be immediately screened on a monitor, eliminating the need to undergo a conversion process to create dailies for viewing. The footage recorded each day will usually go through a daily process to create a second copy for protection and create multiple copies for viewing by producers or other stake holders.

During the creation of digital effects, or computer generated images, content creators often assemble daily to screen and review work in progress visual effects and animation development. This will contain the previous day's work by animators and effects artists in various stages of completion. Once a shot or scene is at the point where additional feedback from the director, producer or executives is needed they will assemble and screen for the creative decision makers either as part of the normal dailies screening or as a separate weekly screening.

Dailies used for digital visual effects or in editing will usually contain timecode and scene and take information to maintain synchronous sound and picture. These numbers are used to search and compile, edit, and eventually conform the original high-quality picture and audio to compose the final product. Today, all editing and digital effects are performed on computer-based, non-linear systems which use a digital copy of the dailies or other source content. At present, there is no ability to identify specific scenes, actors, emotions, color, or physical elements (e.g., products or locations) within the source content other than by attempting to identify time code and scene/take number that the desired actor, product, or location was supposed to appear in accordance with the script.

When this information is broken or lost, searching for content becomes an arduous task requiring a manual process of probing through scripts notes, codebooks, or manually scrubbing through digital files on a digital playback platform (e.g., an editing system).

While dailies footage may represent new content creation, there is also the rapid digitization of movie and television libraries, commercials, documentaries, national archives and historic news footage. This unprecedented regeneration of content in digital form requires detailed cataloging, re-editing, screening, and approvals for rerelease to satisfy market demands without the benefit of relying on original script information, editorial codebooks, or recollections from the original creative content makers.

The information included in this Background section of the specification, including any references cited herein and any description or discussion thereof, is included for technical reference purposes only and is not to be regarded subject matter by which the scope of the invention as defined in the claims is to be bound.

### SUMMARY

The technology disclosed herein is a system implemented on one or more computers with substantial processing power that uses machine learning or artificial intelligence (Al) to identify and tag objects, actors (e.g., faces), characters, actions, and backgrounds (i.e., image elements) in image frames of digital video (i.e., shots). Identifying shots containing particular image elements within film footage can aid numerous market applications including identifying image elements for treatment by visual effects, locating scenes for editorial treatment and marketing of the film or show, and locating image elements within scenes for use in coordinated advertising (e.g., product placement).

Once the system identifies a particular, known image element in a frame, it generates tags that label the particular image element as belonging to a particular type or category (e.g., a particular actor) and further records the x-y coordinates of where the image element is found in the frame. The tags, coordinates, and corresponding frame identifier are stored in a searchable database. The system may be trained on a daily basis with each new set of footage to refine the recognition of show-specific image elements (in addition to general objects) and to further recognize new image elements that may not have appeared in prior footage. The system may be trained to identify objects generally based upon generic object recognition training applied to the shots and further trained to identify particular or specific image elements found in the film or show. This dual source recognition training provides for greater automated scanning results and a more efficient scanning process.

In one exemplary embodiment, a computer-implemented image classification system includes a storage device configured to ingest and store one or more video files thereon. The one or more video files comprise a plurality of video frames. One or more processors are configured with instructions to perform the following special purpose computing tasks. A subset of the video frames from the one or more video files indicative of substantial motion in context with adjacent video frames is identified. The subset of the video frames is separated as a sample data set. The subset of video frames is filtered to identify discrete image elements within the video frames. The image elements are segmented from the video frames in the subset of video frames. A multi-dimensional feature vector is calculated for each image element. The feature vectors are clustered into a plurality of clusters based upon similarities in feature vector values. The clusters of feature vectors are processed with a support vector classifier machine to refine clusters into predicted classes.

In another exemplary embodiment, a method is implemented in a computer system for indexing and cognizably labeling image elements from a plurality of video frames. One or more processors in the computer system is particularly configured to perform a number of processing steps including the following. One or more video files are ingested and stored on a storage device within the computer system. The one or more video files comprise the plurality of video frames. A subset of the video frames from the one or more video files indicative of substantial motion in context with adjacent video frames is identified. The subset of the video frames is separated as a sample data set. The subset of video frames is filtered to identify discrete image elements within the video frames. The image elements are segmented from the video frames in the subset of video frames. A multi-dimensional feature vector is calculated for each image element. The feature vectors are clustered into a plurality of clusters based upon similarities in feature vector values. The clusters of feature vectors are processed with a support vector classifier machine to refine clusters into predicted classes.

In a further exemplary implementation, a non-transitory computer readable storage medium contains instructions for instantiating a special purpose computer to index and cognizably label image elements from a plurality of video frames. The instructions implement a computer process comprising the following steps. One or more video files are ingested and stored on a storage device within a computer system. The one or more video files comprise the plurality of video frames. A subset of the video frames from the one or more video files indicative of substantial motion in context with adjacent video frames is identified. The subset of the video frames is separated as a sample data set. The subset of video frames is filtered to identify discrete image elements within the video frames. The image elements are segmented from the video frames in the subset of video frames. A multi-dimensional feature vector is calculated for each image element. The feature vectors are clustered into a plurality of clusters based upon similarities in feature vector values. The clusters of feature vectors are processed with a support vector classifier machine to refine clusters into predicted classes.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. A more extensive presentation of features, details, utilities, and advantages of the present invention as defined in the claims is provided in the following written description of various embodiments of the invention and illustrated in the accompanying drawings.

### BRIEF DESCRIPTION OF THE DRAWINGS

Fig. 1 is schematic diagram of functional modules of a machine for recognizing and classifying image elements in video frames from a multi-day film-making project.
FIG. 2 is a schematic diagram of functional modules of a machine for creating a general category classifier database with class labels for recognizing, classifying, and labeling image elements in video frames.
FIG. 3 is a schematic diagram of a system incorporating multiple classification and labeling inputs to label and store classes of image elements in video frames for search and retrieval of desired video frames.
FIG. 4 is a process flow diagram of a method for training a show-specific cognitive indexing machine for recognizing and classifying image elements in video frames from a multi-day film-making project.
FIG. 5 is a process flow diagram of a method detail for pre-processing video frames.
FIG. 6 is a process flow diagram of a method detail for sampling video frames predominately depicting motion.
FIG. 7 is a process flow diagram of a method detail for removing duplicate video frames from a sample set of video frames.
FIG. 8 is a process flow diagram of a method detail for identifying and isolating image elements in video frames.
FIG. 9 is a process flow diagram of a method detail for computing feature vectors corresponding to image elements extracted from video frames.
FIG. 10 is a process flow diagram of a method detail for training a support vector classifier on clusters of feature vectors corresponding to image elements to classify the feature vectors.
FIG. 11 is a process flow diagram of a method detail for training a comprehensive support vector classifier for the complete, multi-day film-making project.
FIG. 12 is a process flow diagram of a method for training a general category cognitive indexing machine for recognizing, classifying, and labeling image elements in video frames.
FIG. 13 is a process flow diagram for creating a network graph of classes of classified image elements for use in manual labeling of classes
FIG. 14 is a schematic diagram of an exemplary computer system for processing, identifying, indexing, and labeling classes of image elements within film or video frames as described herein.

### DETAILED DESCRIPTION

As shooting is completed on a film set, the film or video is processed or saved to provide a set of footage for review. For example, in the context of a motion picture or a serial television production, unedited film footage captured during each shooting day, referred to as "dailies," is usually processed immediately for review. Dailies typically include a reference to each take. For example, during the typical filming of a motion picture, a movie camera captures the image on 35 mm film and a separate audio recorder (such as a Nagra tape recorder or digital hard disk recorder) records the sound on the set. The film negative is developed and scanned so that the images can be viewed on a projector or video monitor. The sound is synched to the film using a clapperboard as a reference. The clapperboard is labeled to identify the scene, shot, and take number for the camera. The numbers are also read aloud to label the audio recording. Once camera and sound are rolling, a camera assistant will close the clapper creating a visual and auditory reference point.

During the synchronizing process after the film has been developed, a technician will look at the numbers on the slate board and then match the numbers with the verbal slate recorded in the sound file. Then the technician reviews the film to identify the frame where the clapper first closes and for the beep or clapping sound on the audio tape/file, adjusting one or the other until they occur simultaneously upon playback. This process is performed for every take. Modern systems record synchronized timecodes onto the film and audio tape at the time of shooting, allowing for automatic alignment of picture and audio. Today, most editing is done on computer-based, non-linear editing systems which use a digital video copy of the film footage. When the film is scanned, keycode numbers are logged and a number is assigned to each frame based on an arbitrary hole punch at the beginning of the film. The keycode and frame numbers are later used to assemble the original film to conform to the edit.

In one exemplary implementation of a show-specific approach of the present system, digital video dailies are uploaded into an AI processing system (e.g., an artificial neural network) to classify image elements in frames to create data clusters of like image elements and ultimately label the clusters from the dailies for searching by users. This system may be trained and continues to train based upon data sets of frames extracted from the film dailies. Once initially trained, the system may be used to process all dailies for a particular film or may process only certain scenes or takes identified or selected by an operator. The show-specific process provides identification and classification of objects in video frames by automatic image segmentation and categorization with the focus on show specific parameters. The predictive knowledge of the system can be continually updated as additional dailies are processed over time.

The general category approach includes continuous training of a neural network with a known and constantly revised or updated picture set. Initial, generic training can be provided by libraries of images of elements, e.g. objects, faces, backgrounds, etc. The trained model is then used to tag general and show-specific objects classified from the show-specific approach. The tagging or labeling may be further refined with user input from post-production phase via adjustments through network graph presentations of the classes and affixing or renaming of labels for the classes.

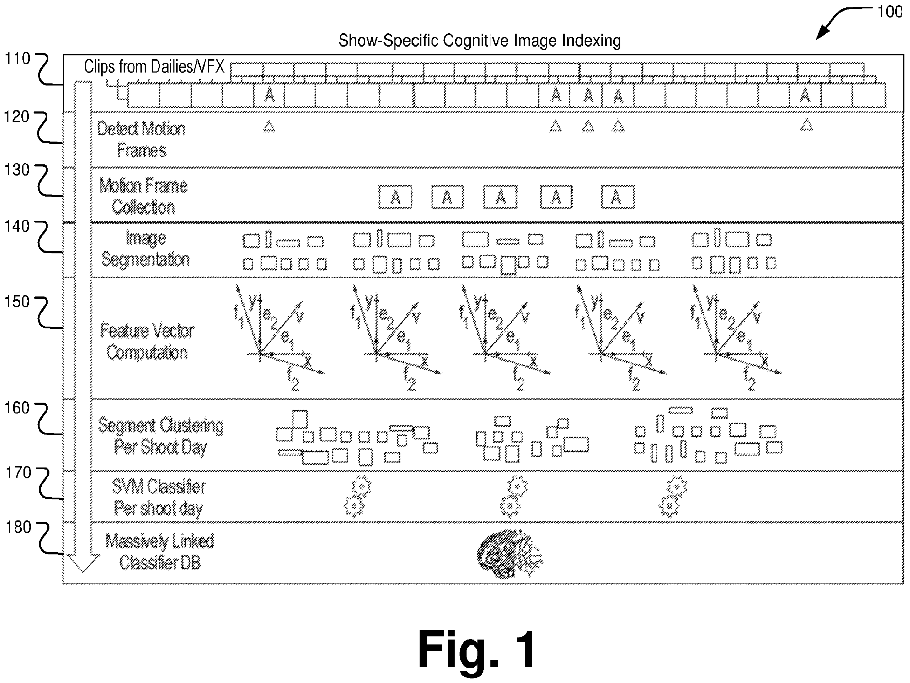

An exemplary implementation modules involved in a show-specific approach to cognitive indexing of image frames is depicted schematically in FIG. 1. When a video clip is received into the system as indicated in layer 110, a frame separation process may be performed initially to reduce the number of frames analyzed and thus reduce the processing burden on the system as indicated in layer 120. For example, in any particular video clip (perhaps one depicting a particular scene) there may be pronounced movement or change in the images between some adjacent frames and little or no perceptible movement or image change between other adjacent frames. When there is little image movement/change between frames, this suggests that the images in each frame are likely the same (e.g., a scene with a stationary shot or a focus on a stationary character engaged in dialogue). Processing all of these frames would likely yield redundant results and would be an unnecessary waste of processing resources for the system. Therefore, only frames with a higher likelihood of different images may be collected and processed by the system as indicated in layer 130.

Once the frames are selected/separated for analysis, the system may analyze each frame to identify potential image elements in each frame. The system may incorporate a neural network in order to process the images and identify potential image elements for further consideration. Each frame may be broken down into one or more areas or segments based upon image elements identified in the segments as indicated in layer 140. The image segments may then be converted mathematically into feature vectors (i.e., a numerical representation of the image segment) as indicated in layer 150. The feature vectors can identify or correspond to various image elements, for example, objects, backgrounds, faces, etc. Once potential image segments are identified, all likely related image segments extracted from the daily clips may be clustered together based upon correlations between vector values as indicated in layer 160. If the calculated vector values of image segments are close in value, there is a higher likelihood that the image elements in these image segments are the same.

One problem with algorithms for clustering of feature vectors is that the results may be too specific to be helpful. For example, typical feature vector clustering algorithms may identify tens of thousands of clusters across the frames extracted from a single set of video footage. Such a significant number of clusters may be too large to provide practical value for identifying types of image elements. Therefore, the clusters may be further refined and combined (e.g., on the order of a few hundred or less) by processing the image segments through one or more linear support vector classifier (SVC) algorithms as indicated in layer 170. A linear SVC algorithm has the ability to "remember" patterns and can identify relationships between images in different clusters. The algorithm makes a binary decision as to whether an image is more or less like an identified pattern. If the image element exceeds the "more like" threshold, then it is grouped with a particular pattern; if the image element is "less like" the pattern, it is discarded from grouping with that pattern.

Each pattern identified through the linear SVC processing may be considered a classification of a type of image element and stored in a classifier database as indicated in layer 180. The frame numbers and time signatures for each video frame from which an image element is extracted and processed are correlated and saved throughout the cognitive image indexing process and are associated with the corresponding classification in the classifier database. Once the classifications are saved, they can be labeled with searchable identifiers either automatically through a further trained classifier comparison algorithm with labels or through a manual review and labeling process.

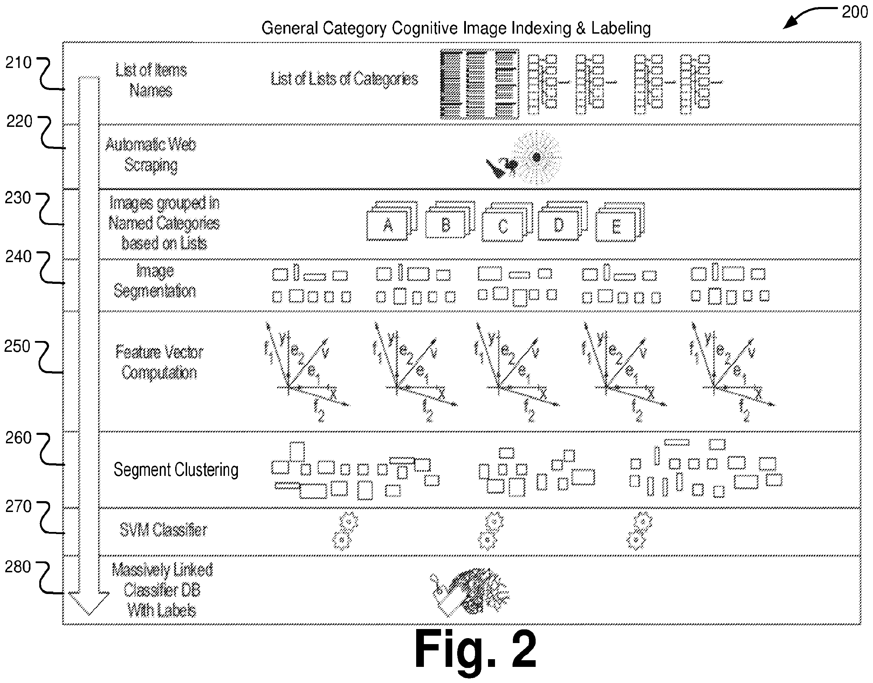

A general category approach to cognitive indexing that provides for naming or labeling of image elements in segments is presented in FIG. 2. A hierarchical ontology sourced from a library, the public domain (e.g., the Wikipedia ontology), or built specifically for general category indexing is created for categorizing and cognizably labeling classes of images as shown in layer 210 Such an ontology may be formulated as nested lists of categories and objects within such categories. A data set of images corresponding to the categories of the ontology are sourced, e.g., from a particular library of images, or identified from publicly accessible images (e.g., by searching or scraping the World Wide Web) as shown in layer 220. The nature of these pictures is known as they are gathered to be representative of categories or objects listed in the ontology. The collected pictures are thus collated and grouped together based upon the corresponding category or object from the ontological list as shown in layer 230.

Once the pictures are grouped by category or object, the system may analyze each frame to identify potential image elements in each frame. The system may incorporate a neural network in order to process the images and identify potential image elements. Each frame may be broken down into one or more areas or segments based upon image elements identified in the segments as indicated in layer 240. The image segments may then be converted mathematically into feature vectors as indicated in layer 250. The feature vectors can identify or correspond to various image elements, for example, objects, backgrounds, faces, etc. Once potential image segments are identified, all likely related image segments may be clustered together based upon correlations between vector values as indicated in layer 260. If the calculated vector values of image segments are close in value, there is a higher likelihood that the image elements in these image segments are the same.

The clusters may then be used to train one or more linear SVC algorithms to create a collection of labeled classes as indicated in layer 270. Once trained, the linear SVC algorithm has the ability to "remember" patterns and can thus decide or "predict" whether an unknown image is more or less like images in any of the known classes the SVC trained on. Each pattern identified through the linear SVC processing may be considered a classification of a type of image element and stored in a labeled classifier database as indicated in layer 280. Further, show-specific classes of images processed by the show-specific system of FIG. 1 may be processed by the linear SVC trained by the system of FIG. 2 and thereby identified with labeled classes from the general category classification scheme. The cognizable label may be associated with the show specific class and the show-specific class may then be added to the labeled classifier database and is now textually searchable. The use of a public domain library in addition to a show-specific library can provide real object name identification of an unknown image element in addition to merely a unique but non-cognizable class identifier. This process allows the system to automatically cognizably label processed image elements from digital video with 65%-100% accuracy.

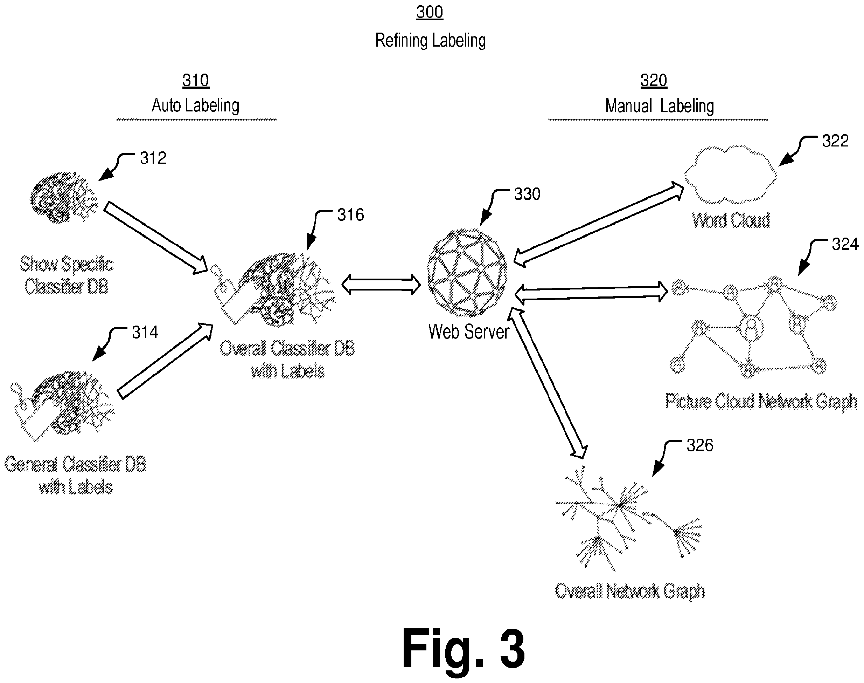

FIG. 3 schematically depicts various system interactions that can be used to refine the class labeling 300. An interface may be provided to allow users to manually tag or label the classes of image elements. Manual tagging may be helpful when there is no tag or the tag is merely a numerical identifier, to provide a cognizable, text searchable label, or to provide a more specific or accurate label, e.g., one that is show-specific. As shown in FIG. 3, and as described above with respect to FIG. 2, initially the show-specific classes described with respect to FIG. 1 may be subject to an auto-labeling operation 310. The classified, but unlabeled feature vectors from the show-specific classification process may be stored in a first show-specific database 312. The generic images classified and labeled as described in FIG. 2 may be stored in a separate general classifier database 314. Once the show specific classes are predicted and assigned labels by the SVM classifier trained on the general classifier database classes, a combined, overall classifier database 316 with labeled classes may be populated with the labeled show-specific classes. It may additionally be populated with the classes from the general classifier database 314 if desired.

In order to further refine the class labels, access to the database may be provided to reviewers to review and analyze data associated with the classes to determine whether the automatic classifications are accurate or whether they need to be changed or refined. This is indicated by the manual labeling operations 320 depicted on the right side of FIG. 3. For example, in the context of a particular film or show, it may be desirable to provide labels specific to the film or show (e.g., object names from the script that are used instead of generic object names). In other cases, the labels assigned by the SVM classifier may just be inaccurate due to an assignment of a label as a best available choice or the SVM classifier in view of the general image classes and the requirement to assign a class that best fits the data. The overall classifier database 316 may be stored on a web server 330 for ease of access by reviewers from remote locations. Alternatively, the overall classifier database 316 may be stored on a file server in a local area network for local access by users.

The manual labeling operation 320 is based upon user review of various data associated with the classes and feedback provided. Depending upon privileges, a reviewer may be able to change a class label or the reviewer may only be allowed to flag a class with a possible label problem and suggest an alternative for later consideration and implementation by a person with administrative rights in order to maintain control over changes to the databases. In the exemplary presentation of FIG. 3, three options for performing manual labeling operations 320 are presented.

A first mechanism is to review the classes using a "word cloud" interface 322. Labels of classes may be presented in a cloud of words where labels presented in larger sizes represent the quantity of content items in that category. For example, the reviewer can search for specific classes based upon the ontology to determine whether any images or how many images were found in the clips associated with the ontology label. This method may be used to spot check for known, important image elements to ensure they are actually classified and accurately labeled. The reviewer may be provided access to image elements and frames associated with the class to review the image elements and confirm appropriate labeling. If a desired label does not appear in the word cloud or is presented in a small size, this is an indication that such an image element is not a prominent feature in daily film footage or across the entire shoot depending upon the database being reviewed.

A second mechanism for review is to leverage a picture cloud network graph interface 324, which can be used to present representative images from each class in a network graph configuration in which relationships between classes are indicated by links. The reviewer can use this interface to review the image elements and associated labels to ensure accuracy in the labeling or change the labeling if appropriate. The reviewer can sample and view multiple images from each node to ensure accuracy and consistency among the image elements assigned to the class. The links between nodes may also suggest similar image elements appear in different classes and may warrant review to determine if maintaining separate classes is proper. It may be that combining the classes under the same label makes sense in the context of a specific show or in general.

A third mechanism for review is to leverage an overall network graph interface 326. Similar to the picture cloud network graph interface 324, a network graph interface 326 is a visualization tool that can graphically present how different data (e.g., image element classes) relate to another by plotting classes as nodes with links or "edges" connecting together classes with relationships. However, because of the large amount of data available through a network graph interface 326, it may be appropriate to limit access privileges to this manual labeling platform option as a quality control function. As an example, the reviewer could view the network graph to identify large sized nodes or clusters for review under the presumption that the larger nodes are more important because of the frequency of an image element. As a quick check, the reviewer could analyze the frame time stamps in the metadata associated with the image elements in the class. If the time stamps all originate from the same clip or several clips with good sample numbers associated with each clip, there is greater certainty that the classification is correct for all of the image elements in the class. Sample frames from the identified clips can be reviewed to confirm the images from the several clips are indeed related and belong in the class. If frame time stamps are disparate in the class, it may indicate a need to investigate further. In another example, the reviewer could identify nodes with multiple mutual relationships to ensure that the separate labeling is accurate or make a determination that the relationships are close enough that the classes should be combined under a single label.

In other implementations, a training protocol can be implemented to recognize additional elements in the shots, e.g., emotions of actors, colors, and relationships between multiple image elements in the frames. For example, animated graphics interchange format (GIF) images or short video sequences (e.g., 2-3 seconds in length) showing various emotions can be used to train the neural network using motion vector analysis to recognize the display of certain emotions across a series of frames. For show specific accuracy, a short sequence of a particular actor displaying a particular emotion can be manually input to develop a base motion vector profile for comparison with frame sequences to identify both the particular actor and the particular emotion.

Particular colors or locations of colors within images can also be identified and tagged using the feature vector process. The vector value can correspond to the present of particular colors in the foreground, background, or on particular objects or actors. For example, a granular tag of an actor wearing a particular color and affecting a particular emotion could be developed. In another example, a vector value for a particular relationship between combinations of an object, an actor, and a background could be developed and any images with the desired combination can be tagged for ease of location and review.

The tagging and categorization of image elements from film or video segments (e.g., from series television) provides several benefits and advantages, both with respect to and ancillary to the production of the final film or show. As substantially all shots are identified by tags, users (e.g., directors, film editors, visual effects editors, etc.) can search through all shots and easily identify particular frames, scenes, or sequences of interest for editing. For example, if a visual effect is required to be added to a particular object, actor, or background, the VFX editor can easily locate all frames from the film or video footage that have the desired image element for further effects processing. In another example, in response to a script change, a film editor can easily identify all takes or frames within a take that may need to be substituted for alternate takes. Further, different emotions throughout the scenes can be plotted and graphed (e.g., in colors or levels) for use in marketing (e.g., to identify potential scene selections), editorial decisions (e.g., to determine whether there are too many (or not enough) scenes of certain emotions in order to set an appropriate tone to the film), and compliance editing (i.e., to ensure the film meets a desired audience rating level).

Other types of users (e.g., producers, marketing and advertising staff, etc.) can also search through the tagged film or video footage to identify specific scenes for use in marketing the film or show. For example, if the desired theme for presentation in a promotional advertisement for a film is to involve particular emotions, the film or video can be searched for tagged images or sequences corresponding to the desired emotion for possible use in the advertisement. Additionally, the film or video footage can be searched for use in ancillary advertising, e.g., for a film sponsor that paid for product placement in the film. All instances of the product appearing in the film may be are located through a search on an image element corresponding to the product object. This type of recognition may be one that is enhanced by manual training with images of the show-specific object placed in the film for better accuracy. In another exemplary, use, the final film or various edits of the final film can be scanned for faces of particular actors to create a list of appearances for tracking residual payments due to actors for each public performance of the film. Many other uses of the tagged image database are possible.

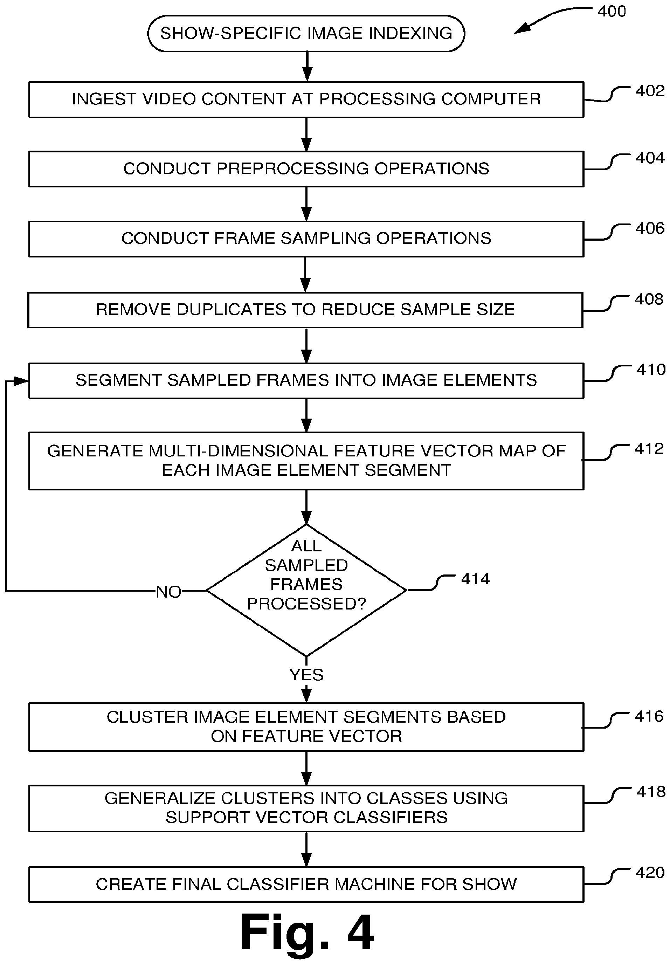

FIG. 4 depicts an exemplary algorithm for performing the show-specific approach 400 for indexing image elements in video frames. Initially, digitized images from film footage are ingested, i.e., uploaded and received at a processing computer, e.g., a media server, as indicated in operation 402. The media server may be equipped with one or more graphics processing units (GPUs) in addition to one or more standard computer processing units for increased video processing speed and capabilities. As part of the uploading step, the video clips may be preprocessed to provide standardization in file type, image form, and resolution for further processing steps as indicated in operation 404.

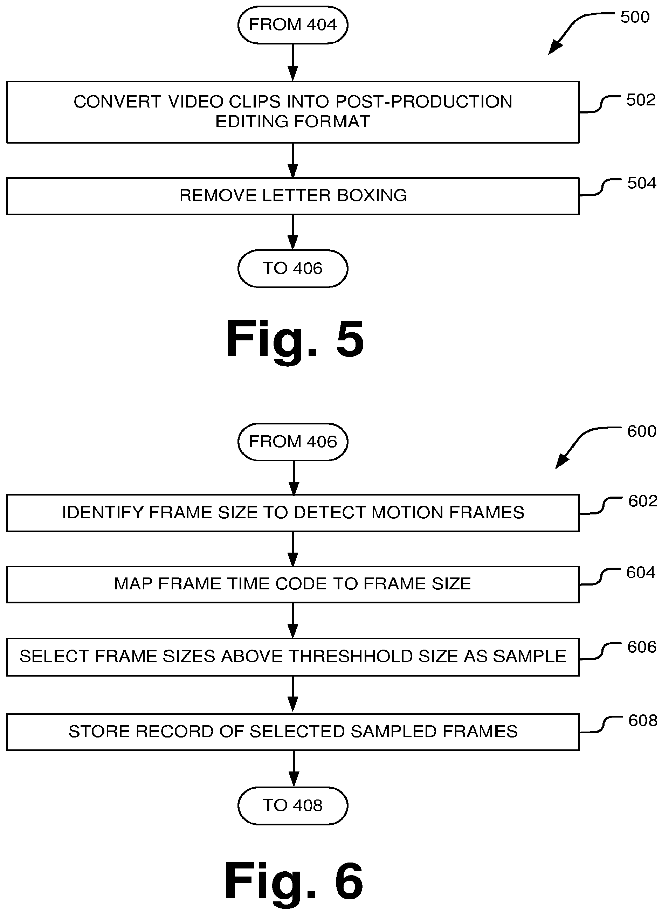

As depicted in FIG. 5, as a first preprocessing step, the video clips are converted to a post-production editing format for ease of further processing as indicated in operation 502. In one exemplary embodiment, the film footage may be formatted in ProRes format (.MOV). ProRes is a lossy video compression format developed by Apple Inc. for use in post-production that supports up to 8K resolution. If the video clips are not initially received in ProRes, they may be transcoded into .MOV format using, for example, FFmpeg (www.ffmpeg.org). The FFmpeg tool is able to decode, encode, transcode, multiplex (mux), demultiplex (demux), stream, filter, and play a large number of formats of digital video images.

Next, any letterboxing of the video frames is removed as indicated in operation 504. Letterboxing is the practice of transferring film shot in a widescreen aspect ratio to standard-width video formats while preserving the film's original aspect ratio. The result is a videographic image with black bars (mattes) above and below the film image in the frame. These mattes are actually part of the image presented on each frame of the video signal. Therefore, it is desirable to remove this unneeded, excess information that might be misunderstood in future processing steps. The letter boxing can be removed by running the frames through a filter program, for example, the "crop" command in the FFmpeg filter tool.

Returning to FIG. 4, once the preprocessing operations are completed, the indexing algorithm 400 conducts a frame sampling process as indicated in operation 406. Typical film is captured at 30 frames per second. When translated to video, this rate is reduced by a few milliseconds due to processing idiosyncrasies, but may still be considered to be 30 frames per second for the purposes of this exemplary discussion. At this rate 10 minutes of video translates to 18,000 frames and an hour of video is equivalent to 108,000 frames. The frames in the video clip may be sampled at an interval to reduce the data set for future processing steps. Recognizing that images often will not change significantly over the course of a second, it is sensible to reduce the sample rate and avoid the overly taxing processing power that would be required to process every video frame to identify image elements in the video clips. In one simple embodiment, an arbitrary distance between sampled frames may be chosen for sampling, e.g., every 10^{th} frame may be sampled.

In an alternate, more sophisticated exemplary frame sampling algorithm is depicted in FIG. 6. In this exemplary process, the sizes of the video frames may be interrogated to identify appropriate frames for sampling as indicated in step 602. It may be desirable to sample sections of video clips presenting significant motion more frequently than sections of the video with little or no perceptible motion. This is because an image element appearing in a section of video frames without motion will remain constant and there is no need to identify such an image element multiple times. However, sections of video with significant motion are more likely to contain multiple desirable image elements as backgrounds, scenery, and objects therein are likely to change.

Typically, three types of pictures or frames are used in video compression: I, P, and B frames. An I-frame (intra-coded picture), presents a complete image, like a JPG or BMP image file. A P-frame (predicted picture) holds only the changes in the image from the previous frame. For example, in a scene where a car moves across a stationary background, only the car's movements need to be encoded. The encoder does not need to store the unchanging background pixels in the P-frame, thus saving space. A B-frame (bidirectional predicted picture) saves even more space by using differences between the current frame and both the preceding and following frames to specify its content. P and B frames hold only part of the image information (the part that changes between frames), so they need less space in the output file than an I-frame and thus are smaller in file size.

Rather than trying to identify the type of picture frame, it may be easier to simply interrogate the byte size of the frames and thereby determine the likely I-frames that will have full picture information and will also likely be frames with motion. An exemplary application that can identify frame size of video clips is the ffprobe tool (www.ffmpeg.org). The ffprobe tool can also be used to identify the timecode of each frame. The timecode is metadata recorded with the video that uniquely identifies every frame of a clip using a time stamp in hours, minutes, seconds, and frames. In .MOV format, the timecode is extracted from the tmcd track. A temporary database may be created to map the timecode and frame size of each picture frame together for later identification of frames to select for further processing as indicated in step 604.

The preprocessing algorithm may then sample a subset of the frames in a clip based upon the frame sizes as indicated in step 606. For example, the preprocessing algorithm may be programmed to select all frames over a certain size threshold. In an exemplary embodiment, the preprocessing algorithm may be configured to identify and select all frames of a size within 3 times the standard deviation from the average of frame sizes in the clip. This type of configuration will lead to more frequent sampling in sections of the video with larger frame sizes, i.e., higher likelihood of being motion frames. In another exemplary implementation, the preprocessing algorithm may be configured to combine a random or periodic sampling scheme with a size-based sample scheme to reduce the sample size while still providing a high likelihood of motion frame selection. For example, the preprocessing algorithm may first select a set of 10 frames per second and then apply the standard deviation size selection process described above to the 10 selected frames to provide a robust sample of likely motion frames. The timecodes of the selected frames may be written to a database for identification of the selected motion frames for further processing as indicated in step 608.

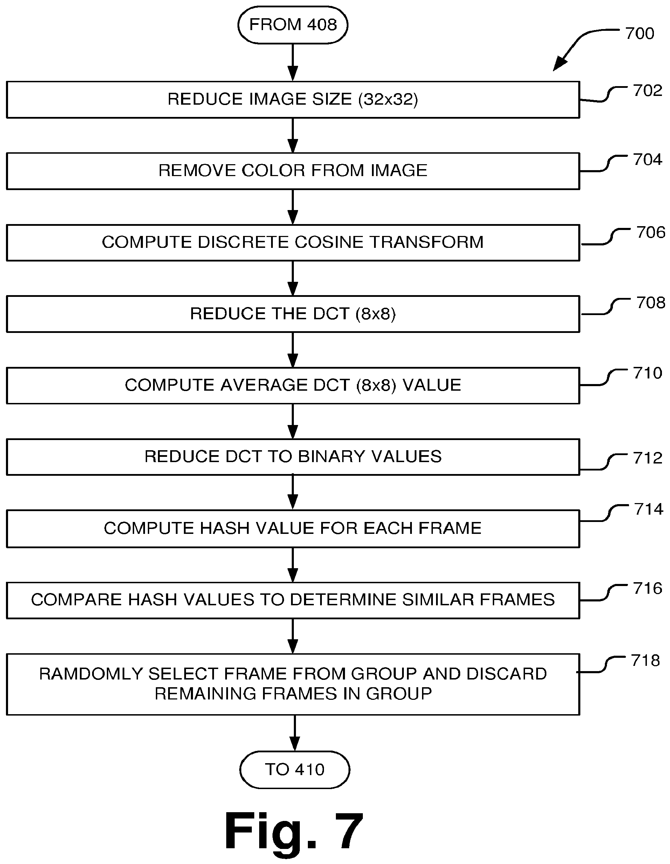

Returning to FIG. 4, the indexing algorithm 400 next works to reduce the sample set further by removing duplicate (or substantially duplicate) frames as indicated in step 408. In one exemplary implementation, this process can be performed by using a perceptual hash function, e.g., imagehash (www.github.com/JohannesBuchner/imagehash) on the sampled frames and then comparing the hash values to identify the duplicates. An exemplary perceptual hash process 700 is presented in FIG.7. Perceptual hash algorithms describe a class of comparable hash functions. Features in the image are used to generate a distinct (but not unique) fingerprint, and these fingerprints are comparable. Perceptual hashes create a different numerical result as compared to traditional cryptographic hash functions. With cryptographic hashes, the hash values are random; identical data will generate the same result, but different data will create different results. Comparison of cryptographic hashes will only determine if the hashes are identical or different, and thus whether the data is identical or different. In contrast, perceptual hashes can be compared to provide a measure of similarity between the two data sets. Thus, in the context of video, perceptual hashes of similar images, even if presented at different scales, with different aspect ratios, or with coloring differences (e.g., contrast, brightness, etc.), will still generate values indicating similar images.

A principle component of perceptual hash algorithm is a discrete cosine transform (DCT) which can be used in this context to mathematically translate the two dimensional picture information of an image into frequency values (i.e., representations of the frequency of color change, or color which changes rapidly from one pixel to another, within a sample area) that can be used for comparisons. With DCT transforms of pictures, high frequencies indicate detail, while low frequencies indicate structure. A large, detailed picture will therefore transform to a result with many high frequencies. In contrast, a very small picture lacks detail and thus is transformed to low frequencies. While the DCT computation can be run on highly detailed, pictures, for the purposes of comparison and identifying similarities in images, it has been found that the detail is not necessary and removal of the high frequency elements can reduce the processing requirements and increase the speed of the DCT algorithm.

Therefore, for the purposes of performing a perceptual hash of an image, it is desirable to first reduce the size of the image as indicated in step 702, which thus discards detail. One way to reduce the size is to merely shrink the image, e.g., to 32X32 pixels. Color can also be removed from image resulting in a grayscale, as indicated in step 704, to further simplify the number of computations.

Now the DCT is computed as indicated in step 706. The DCT separates the image into a collection of frequencies and scalars in a 32x32 matrix. For the purposes of the perceptual hash, the DCT can further be reduced by keeping only the top left 8x8 portion of the matrix (as indicated in step 708), which constitute the lowest frequencies in the picture.

Next, the average value of the 8x8 matrix is computed (as indicated in step 710), excluding the first term as this coefficient can be significantly different from the other values and will throw off the average. This excludes completely flat image information (i.e. solid colors) from being included in the hash description. The DCT matrix values for each frame are next reduced to binary values as indicated in step 712. Each of the 64 hash bits may be set to 0 or 1 depending on whether each of the value is above or below the average value just computed. The result provides a rough, relative scale of the frequencies to the mean. The result will not vary as long as the overall structure of the image remains the same and thus provides an ability to identify highly similar frames.

Next, a hash value is computed for each frame as indicated in step 714. The 64 bits are translated following a consistent order into a 64-bit integer. In order to compare two images, one can count the number of bit positions that are different between two integers (this is referred to as the Hamming distance) as indicated in step 716. A distance of zero indicates that it is likely a very similar picture (or a variation of the same picture). A distance of 5 means a few things may be different, but they are probably still close enough to be similar. Therefore, all images with a hash difference of less than 6 bits out of 64 may be considered similar and grouped together. The hash process may be completed by randomly selecting one image out of a group for further use in the overall indexing process and discarding the duplicates as indicated in step 718. Thus, a large sample of frames with highly duplicative images removed is created. Even though the duplicates are removed from the sample pool, the relationship of the duplicates to the retained frame may be maintained in a database in order to correlate all originally sampled frames with the same label as the chosen frame once the indexing and labeling process is complete.

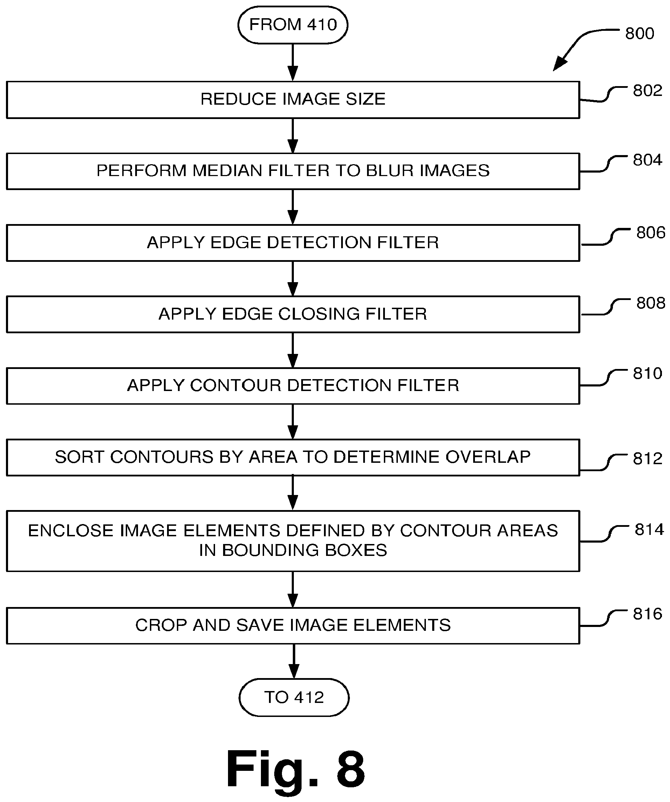

Returning to the overall indexing process of FIG. 4, now that frame duplicates are removed from the samples, each remaining motion frame is segmented into image elements as indicated in operation 410. As noted above, image elements can be any number of objects (e.g., a car, a ball, a chair, etc.), background images (a building, a prominent geographic feature, etc.), people (e.g., particular actors), or any other type of discrete element that may be found in the frame image. Image elements can be automatically identified and extracted from sampled frames based on identification of edges, sharpness, color, and other criteria. An exemplary segmenting process 800 for separating image elements from within sampled frames is presented in FIG. 8.

The segmenting process 800 may begin by resampling the full frame images (not the reduced images from the perceptual hash process) at a smaller size, e.g., 15% of the original size, as indicated in step 802. As in the perceptual hash process, reducing the size of the original image removes details and only larger objects remain perceptible. As before, maintaining a higher resolution is possible, but it will return many more object features (e.g., edges) than desired and will slow the processing speed of the algorithm. The reduction in image size has been found to increase processing speed while still identifying desired image elements in the frames.

Next, a number of filters may be applied to the reduced image size in order to identify image elements. In one exemplary implementation, filters from the OpenCV library (opencv.org) may be used. First, a median filter [medianBlur()] with a kernel size of 3 may be performed as indicated in step 804 to smooth or "blur" the frame images. Blurring of the frame images averages out noise and helps eliminate false edges. The most common types of filters are linear in which a pixel's output value is determined as a weighted sum of input pixel values. When each pixel in the frame is run through the median filter, each pixel is replaced with the median value of its neighboring pixels (located in a square neighborhood around the evaluated pixel).

After the blurring filter, an edge detection filter may be applied as indicated in step 806. One well-known exemplary filter for edge detection is the Canny filter [canny86()] (aperture size 5; where the aperture size is kernel/size of the Guassian). Next, a gap closing or "morphological close" operation, e.g., [morphologyEx()], may be applied to connect edges with missing pixels along them as indicated in step 808. Typically, raw edge detection doesn't catch the entire edge, e.g., due to lighting, heavy vs. light lines, etc. The edge closing filter is useful to remove small holes of disconnected edges after edge filtering and fills in the missing pixels to clean it up.

Once the edges are complete, a contour detection filter, e.g., [findContours()], may be applied as indicated in step 810. Contours may be understood as a curve joining all the continuous points along a boundary having same color or intensity. Identification of contours provides a useful tool for shape analysis and object detection and recognition. The algorithm uses the contour detection filter to translate edges into objects. After edge detection, the image is reduced to a binary construction, just black and white lines and areas. An object to be found will appear white on a black background. Edges that are determined to define a particular object (image element) may be labeled as edges that belong to the object. Each contour is stored as a vector of points on the found edges and a list of potential image elements in a vector form can thus be created.

Next, the contours are sorted by area as indicated in step 812, e.g., using [contourarea()], to determine whether overlapping contours are likely part of the same image element or are likely different image elements. The [contourarea()] function can provide hierarchy information about whether contours overlap as parent, child, or as fully nested. Nested contour areas, i.e., where one contour is fully enclosed within another contour area may be considered likely the same image element (e.g., a wheel inside a tire), whereas contour areas that only partially overlap may be considered separate image elements.

Now that likely separate image elements have been identified, rectangular bounding boxes may be fitted and placed around the top ten largest contour areas in each frame, e.g., by using the [boundingRect()] function, as indicated in step 814. Just as some contour areas may overlap, the bounding boxes may overlap to encompass the identified image elements. In this step it is acceptable if some image elements in some frames are missed as not being in the top ten sized bounding boxes because they will most likely be picked up in other frames. The top ten largest bounding boxes in each frame may then be cropped and saved for further processing as indicated in step 816. Location identification information, i.e., the time stamp from each frame will be stored in conjunction with each cropped image element in order to identify the original frame for later searching through daily footage.

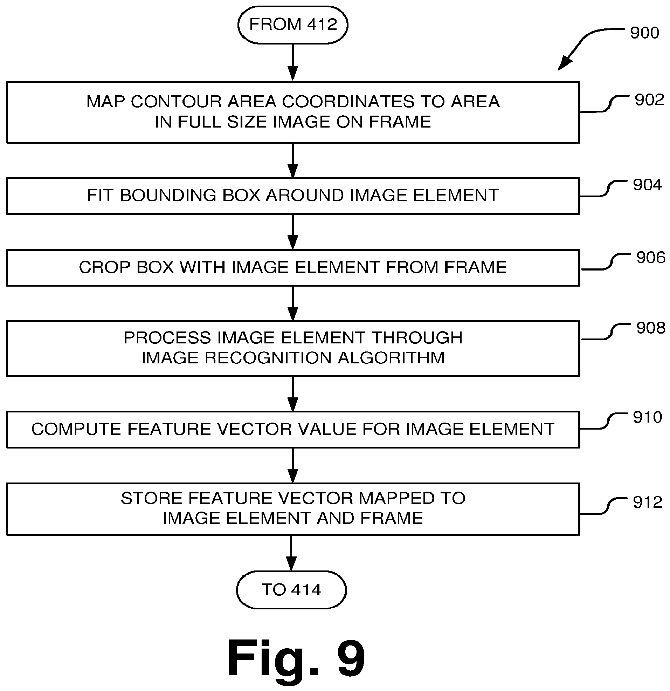

Returning to the overall indexing process flow of FIG. 4, the algorithm returns again to processing the full sized images in the sampled frames in order to generate a multidimensional feature vector map of each image element segment as indicated in operation 412. An exemplary embodiment of a subroutine for performing the processing function is depicted in greater detail in FIG. 9. In a first step, the contour coordinates for each top ten sized contour area previously determined are mapped to the full sized image in the corresponding frame as indicated in step 902. A bounding box is again fitted around each of the mapped areas indicating an image element as indicated in step 904. The full sized image within the area of the bounding box is then cropped as indicated in step 906 and processed through an image recognition algorithm as indicated in step 908.

In one exemplary implementation, the image recognition algorithm used may be TensorFlow (see, github.com/tensorflow/models/tree/master/research/inception]) which is a convolutional neural network (CNN) machine learning system. The TensorFlow algorithm may be initially trained on an academic data set (e.g., ImageNet <www.image-net.org>) in order to provide a basis for image comparison and training of a new, unknown data set. In this case, the data set is an image element from a sampled frame. The training procedure on new data sets employs synchronous stochastic gradient descent (SGD) algorithms across multiple graphic processing units (GPUs). Stochastic approximation algorithms are recursive update rules that can be used, among other things, to solve optimization problems and fixed point equations when the collected data is subject to noise. The SGD tries to find minima or maxima in the data set by iteration when there is no clear mathematical model of the system. A user may specify the use of one or more GPUs. Synchronous training across multiple GPUs allows for batch-splitting by dividing a given sample set. The output of the image recognition algorithm is a specific feature vector corresponding to each image element in a frame as indicated in step 910. The feature vector in this embodiment is a vector comprised of 2048 floating point numbers. The feature vector is calculated based upon the closeness of an image element from the frame to a known object classes from the academic data set on which the image recognition algorithm originally trained. The feature vector is then mapped to the image element and frame information and stored for use with further processing steps.

Returning to FIG. 4, the indexing process flow 400 iteratively segments image elements in each sampled frame and computes feature vectors for each image element until all image elements in all frames are assigned a computed feature vector as indicated in operation 414. Once the data set of feature vectors for all image elements is computed, the feature vectors are used to cluster image elements based upon closeness of values as indicated in operation 416. Clustering is a procedure of grouping a set of objects in such a way that objects in the same group (called a cluster) are more similar in some sense or another to each other than to those in other groups (clusters). One exemplary algorithm for use in clustering feature vectors of images is a density-based spatial clustering of applications with noise (DBSCAN) (Scikit Learn Library, www.scikit-learn.org). Given a set of points in some space, the DBSCAN algorithm groups together points that are closely packed together (points with many nearby neighbors, i.e., data within a certain radius), marking as outliers points that lie alone in low-density regions (whose nearest neighbors are too far away).

DBSCAN requires two parameters: a neighborhood radius epsilon (ε or eps) and the minimum number of points (minPts) required to form a dense region to consider it a cluster. DBSCAN starts with an arbitrary starting point that has not been visited. DBSCAN compares other points in all 2048 dimensions of the starting point feature vector. The ε-neighborhood of the starting point is retrieved and, if it contains sufficiently many points, a cluster is started. Otherwise, the point is labeled as noise. Note that this point might later be found in a sufficiently sized ε-neighborhood of a different point and hence be made part of a cluster. If a point is found to be a dense part of a cluster, its ε-neighborhood is also part of that cluster. Hence, all points that are found within the ε-neighborhood are added to a prior found cluster, as is their own ε-neighborhood when they are also dense. This process continues until the density-connected cluster is completely found. Then, a new unvisited point is retrieved and processed, leading to the discovery of a further cluster or noise. In an exemplary implementation for clustering of image elements, the epsilon distance may be set to 15 and the minimum points for a cluster. The DBSCAN process results in an index of uniquely numbered clusters of similar segmented image crops per cluster from the processed film footage.

A problem with the DBSCAN output for purposes of image indexing is that the clusters are too specific and voluminous. For example, if an image element of a soccer ball was identified, DBSCAN might classify different images of the soccer ball in numerous different clusters due to differences in orientation or lighting and shadows, etc. Over all of the possible image elements, DBSCAN could output thousands or potentially millions of different clusters depending upon how long the film segments are and correspondingly how many frames are processed. The output of DBSCAN is thus too voluminous and too narrow to be useful. Therefore, the indexing process 400 conducts a further operation to generalize the cluster results of the feature vectors into larger classes (e.g., all instances of the soccer ball regardless of lighting or orientation) as indicated in operation 418.

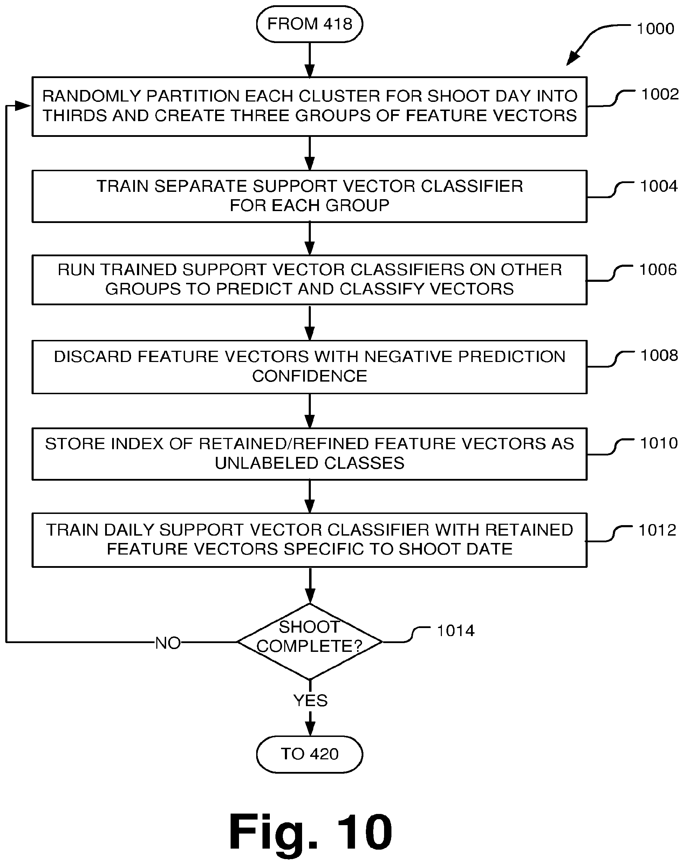

In one exemplary embodiment, the generalization operation 418 may be conducted by training a number of linear support vector classifiers (SVCs) as presented in the classifying process 1000 of FIG. 10. In machine learning, SVCs or support vector machines (SVMs) are supervised learning models with associated learning algorithms that analyze data used for classification and regression analysis. Given a set of training examples, each marked as belonging to one or the other of two categories, an SVC training algorithm builds a model or infers a function that assigns new examples to one category or the other, making it a non-probabilistic binary linear classifier. An SVC model is a representation of the examples as points in space, mapped so that the examples of the separate categories are divided by a clear gap that is as wide as possible. New examples are then mapped into that same space and predicted to belong to a category or class based on which side of the gap they fall.

As a first step in the classifying process 1000, the feature vectors in each cluster may be randomly partitioned into three sets that are respectively combined into three large data groups as indicated in step 1002. A separate multi-class linear SVC may then be trained on a respective one of the groups as indicated in step 1004. In one exemplary embodiment, the linear SVC used may be sklearn.svm.LinearSVC() from the scikit Learn Library (www.scikit-learn.org). The following parameters may be used in the argument:
error penalty C = 1.0
loss function = squared_hinge
norm penalty = I2
multi_class = ovr (one-versus-rest strategy)

All other parameters of the LinearSVC algorithm may be set to default values. The SVM training may be conducted on groups of feature vector values corresponding to the image elements from the dailies, the nature of which is technically unknown. This mode of training is in contrast with typical training of an SVC which is based on a well-known library of data from a third party source with a known label (e.g., a library of "cars"). The training recognizes and "remembers" patterns or similarities in the feature vector values and learns to associate those patterns with the identifier of the cluster to which the feature vector was assigned by DBSCAN.

Once trained, each of the three linear SVCs may process the feature vectors from the other two groups of feature vectors (i.e., the feature vectors not used in the training of the particular SVC) to determine whether these unknown feature vectors are more or less similar to the patterns recognized and remembered by the SVCs. As suggested by the name of the algorithm, this SVC is linear (or binary). Thus, if a particular feature vector is more like the learned pattern of one class, the record of the feature vector (and thus of the corresponding image element) will be saved as part of that class. Alternatively, if the compared feature vector is not close enough to the learned pattern of a class (based upon a set threshold), the feature vector is discarded as not part of the class.

The "one-versus-rest" strategy in the function parameters is chosen in order to address the multiclass problem, i.e., how to determine or "predict" which class a feature vector should be placed within once analyzed when there are more than two classes in the dataset and the feature vector is considered by the SVC to have an affinity for multiple classes. Multiclass classification makes the assumption that each feature vector is assigned to one and only one class following a winner-take-all strategy. For each classifier, the class is fitted against all the other classes. The one-versus-rest approach constructs k separate binary classifiers within the SVC for k class classifications. In this case the class classifications are the unique identifiers assigned to each cluster. The n-th binary classifier is trained using the data from the n-th cluster as positive examples and the remaining k - 1 clusters as negative examples. The ultimate class designation for a feature vector is determined to be the class associated with the binary classifier that returns the highest correlation value for the feature vector in question compared to the learned profile of the class. In this manner the vectors are assigned to one class amongst the number of classes created, which will generally be less than or equal to the number of clusters.

Each of the three SVCs now trained next ingests the feature vectors from the two groups of feature vectors that the particular SVC was not trained on as indicated in step 1006. Each SVC thus predicts or classifies feature vectors from the two groups the SVC was not trained on. Feature vectors determined to have a positive prediction coefficient (i.e., those feature vectors likely to correlate with the trained pattern) are retained and placed in classes and the feature vectors with a negative prediction coefficient are discarded as indicated in step 1008. The identity information for the feature vectors retained and refined by each of the three SVCs is then stored in a class index as indicated in step 1010. At this point, the classes are identified by the DBSCAN identification number from the training and it is not known what the classes of image elements actually depict.

It should also be understood that because the trained SVCs are predicting classifications of the other two groups based upon their learning, it is possible that a feature vector placed in one cluster by DBSCAN may be placed in a class not associated with that cluster number by one or both of the other two SVCs. It is thus possible for clusters to lose feature vectors to other classes and, if a cluster has a low populations to begin with, it is further possible that no class corresponding to that cluster is ultimately created if the feature vectors from that cluster are reassigned to another class. In such a case, fewer classes may be created than the number of original clusters. For example, consider image elements of a particular actor distributed between a number of different clusters due to the angle of the image or lighting differences. The trained SVCs may place different weight on aspects of the feature vector coefficients and determine that the side view and front view of the actor's face are appropriately placed in the same class and thus one of the clusters is not allocated a corresponding class.

A new linear SVC may then be trained using the retained feature vectors in the refined class as indicated in step 1012. This new SVC then provides a single, solid classifier for a shoot date trained upon the initial results of the first three classifiers. The single, shoot-date-specific classifier SVC may then be saved for analysis of clips from future (or prior) dailies from the production to identify image elements of interest throughout the production process of a movie or show.

The creation of classes using SVCs as contemplated in operation 418 of FIG. 4 may continue for each day of shooting over the course of creation of a film or show. Thus, the classifying process 1000 next determines whether a shoot is complete as indicated at decision 1014. If not, the process 1000 returns to step 1002 to process daily footage from the next shoot day and continues to do so until the shooting schedule is complete. At the end of the shoot schedule, a large number of trained SVCs (one per shoot day, e.g., 10's to over 100) may have been created. It may be desirable for future searching through the entire catalog of unedited film footage to build a single, global SVC for the project as indicated in operation 420 of FIG 4.

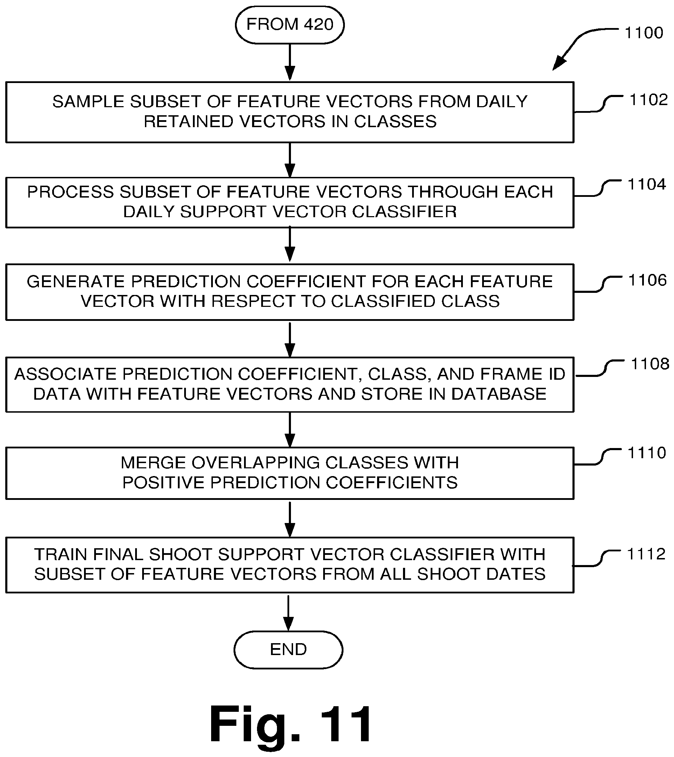

An exemplary process 1100 for creating such a global classifier is detailed in FIG. 11. This global classifier may be trained based upon a subset of the feature vectors collected over the course of the entire shoot in order to reduce the processing demands that millions of feature vectors created over the entire shoot might create. Initially, for each shoot date, a sample of the retained feature vectors from each of the classes for that date may be selected and stored in a database for a final training set as indicated in step 1102. For example, 10% of the feature vectors from each class for each shoot date may be randomly selected for inclusion in a final, global training set. It may further be appropriate to set a minimum number of feature vectors to sample, e.g., 10, in the event that the population of a particular class on a particular shoot day is small.

Next, the global training set thus created may be processed through each of the shoot day SVCs as indicated in step 1104. In this step, the daily SVCs predict classes for the sampled feature vectors from all of the other daily film footage to associate the feature vectors from other days with classes originally developed by the particular SVC. For example, the SVC from Day 1 may classify the sampled feature vectors from Days 2, 3, 4, 5, ... according to its classification protocol. Similarly, the SVC from Day 2 may classify the sampled feature vectors from Days 1, 3, 4, 5, ... according to the Day 2 classifier policy. This same process may be performed for each daily classifier created over the course of the shoot schedule.

As part of the LinearSVC algorithm process, a prediction coefficient may be generated for each feature vector with respect to the class in which the feature vector is classified as indicated in step 1106. The prediction coefficient typically has a value of between 0 and 1 indicating the strength of or confidence in the classification of a feature vector. A prediction coefficient of 0 indicates no confidence in the classification and a prediction coefficient of 1 indicates high confidence in the classification. The assigned prediction coefficient, the feature vector, the class identification, and the unique time stamp of the frame from which the image element was extracted may all be stored in a database as metadata associated with each sampled frame as indicated in step 1108.

It may be appreciated that each daily SVC created will generate different classes with different DBSCAN identifiers as class identifiers. This is in part because the film clips shot each day may vary in subject matter, set, actors, location, etc. However, even if some of the film clips from different daily film footage are different takes of the same scene, the DBSCAN process is performed separately on a different day, on different clips, and will generate a different cluster identification regardless of how close the feature vector values of frame elements in each cluster generated on different days are. Thus, after each daily SVC processes all the feature vectors in the reduced sample set, the number of clusters saved to the database will increase by a factor up to the number of days in the shoot. However, there is likely large overlap amongst feature vectors in multiple classes.

To remove duplicate classes, a merge routine may be designed to interrogate the feature vectors across all of the classes in the database to identify classes with large overlaps in common feature vector identifications as indicated in step 1110. If large numbers of common feature vectors are found among two or more classes, and the prediction coefficients for the feature vectors in each of the classes is high, then it is very likely that the classes are the same, i.e., they likely identify the same image element across the entire film. If these conditions are met, the routine may combine all the feature vectors within a single class with a single identification and discard the other class or classes and thereby remove duplicate classes from the global training dataset. Finally, at the end of a shoot a global or complete shoot SVC may be trained from the merged dataset including classified feature vectors from all shoot dates as indicated in step 1112. Once the classes in the global training dataset are labeled as further described herein, this final classifier machine for the complete film or show may be used to search for frames or clips with specific image elements in them. As discussed above, easily finding specific frames may be important for purposes of advertising, promotion, product placement review, cross selling, visual effects review, and many others.

It should be recognized that the classes constructed by any of the linear SVCs as part of the cognitive indexing process 400 of FIG. 4 are labeled only with cluster identification numbers assigned by the DBSCAN algorithm. The nature of the actual image elements classified in each class is unknown without viewing the image elements in each class, identifying the nature of the image elements (e.g., car, boat, particular actor, etc.), and labeling the class with a cognizable and representative name by which humans can search for types of image elements through the classes in the database. Such identification and labeling of the classes can be performed either automatically or manually with assistance from a presentation framework. Examples of each of these methodologies are discussed below in turn.

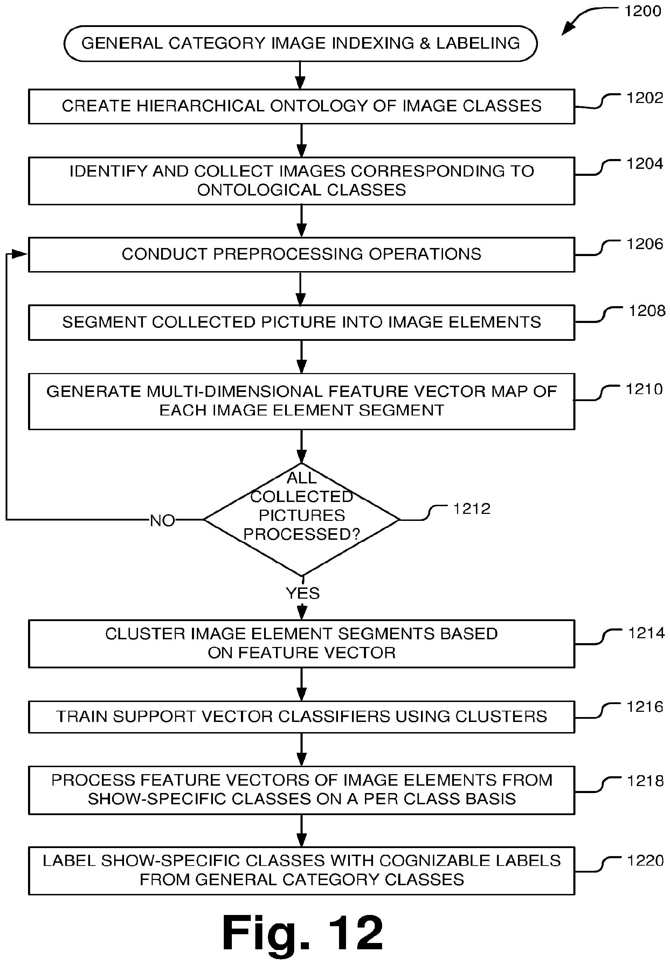

FIG. 12 depicts a process flow of an exemplary method 1200 for general category indexing and labeling of images that can be used to apply cognizable labels to the images classes created as a result of the show-specific indexing process of FIG. 4. The indexing and labeling method 1200 may be initiated with the creation or ingestion of a hierarchical ontology of image classes as indicated in step 1202. A hierarchical ontology provides not only labels for classification categories, but also indicates relationships between the categories. For example, hierarchical ontology for an automobile model may look similar to the following: transportation, ground (vs. air or water) transportation, automobiles (vs. trains, trucks, motorcycles, etc.), manufacturer, model. Other relationships may also be logically linked in the ontology at different or multiple levels-for example, a category for color may have a relationship with each level of the transportation ontology. This ontology can be sourced from the public domain (e.g., the Wikipedia ontology) or built specifically for the purposes the general category indexing method 1200 in order to ensure desired categories and labels are represented, or it could be created as a combination of both types of sources.

Next, image samples corresponding to the categories of the ontology are sourced, e.g., from a particular library of images, or identified from publicly accessible images (e.g., by searching or scraping the World Wide Web) as indicated in step 1204. In this context, the nature of the images are known. Image libraries typically provide categorizations of images by type or subject matter and thus corresponding names, titles, or labels that identify the nature or type of image (e.g., cars vs. boats). These libraries may be searched for images corresponding to each category or label from the ontology. Similarly, public domain pictures may be searched for images corresponding to the ontology categories. In order to be found by textual searching, which is the primary and standard search methodology, public domain images that are identifiable and collectible are ones that are titled or labeled. Therefore, identification information about an image element highly likely to be found in a picture from a library or public source can be saved as metadata along with the image in order to provide a class label for training purposes.

Once an adequate collection of pictures is assembled, preprocessing operations similar to those presented in FIG. 5 may be applied as indicated in step 1206. For example, if a collected picture is in a format that is more difficult for future processing, the format can be changed. Similarly, if a collected picture has unnecessary borders or letterboxing, such borders or areas may be removed by applying an appropriate filter.

After preprocessing of a picture is complete, the indexing and labeling method 1200 may segment the collected pictures into image elements as indicated in step 1208. An exemplary process for identifying and separating image elements from pictures is presented in FIG. 8 and the steps described above with respect thereto may be similarly applied in the present process. In general, segmentation of pictures into image elements will include some form of image size reduction, color removal, blurring, edge detection, edge closing, contour detection, and box bounding of image elements to define crop areas as described above in conjunction with FIG. 8. The segmented image elements are then saved along with a metadata label identifying the category or image type of the image element.

Once the segmented image elements are extracted from a picture, a multidimensional feature vector may be created for each image element as indicated in step 1210. The feature vector of an image element from a picture may be calculated in accordance with the method presented in FIG. 9 and described with respect thereto. In general the contour area of the image element previously determined can be mapped to the original picture and a full size crop of the image element is taken. The image element thus cropped is processed through an image recognition algorithm, e.g., TensorFlow, and a feature vector value may be calculated for the image element. In this case, the metadata label identifying the category or image type of the image element carries forward and is associated with the feature vector for the picture. As indicated in decision step 1212, the preprocessing, segmenting, and feature vector calculation operations are performed on each picture from the image library or the collected image set (or both) until collected pictures have been processed and converted into a feature vector value.

Next, the feature vectors are used to cluster image elements based upon closeness of values as indicated in operation 1214. The same process described with respect to operation 416 in FIG. 4 using, e.g., DBSCAN, to cluster most similar image elements together may be applied. Then one or more SVCs can be trained using the clusters as indicated in step 1216. This training may be similar to that as described in FIG. 10 through step 1012. For example, the feature vectors in each cluster can be divided into thirds to create three separate data sets for initial training of three separate SVCs, which once trained provide predictive classifications on the other two groups. As before, feature vectors with negative prediction confidence can be discarded from the classified groups. In addition, the labels associated with the feature vectors in each class can be compared. Any feature vector with a label that does not correspond to the labels associated with a supermajority of feature vectors in the class may also be discarded to result in a refined, classified, and labeled data set. A general global SVC can then be trained on the retained feature vectors from the first round of classification (similar to the creation of the daily support vector classifier in step 1012).

At this point a general global classifier with labeling capability has been trained and can be used to automatically label the feature vectors from the show specific image elements created through the process of FIG. 4. As indicated in step 1218, each class created by any of the show-specific SVCs can be processed by the general global SVC. It is highly likely that most, if not all, of the image elements in a single class from the show-specific SVCs will be classified by the general global SVC as belonging to a single class. In order to avoid confusion in the labeling process, it is desirable to only process one class from the show-specific database at a time with the general global SVC. Once the general class associated with the show-specific class has been identified, the label from the general class may be assigned to and saved as part of the metadata associated with the show-specific class and the feature vectors therein as indicated in step 1220. In this manner, the show-specific classes are now associated with a cognizable label that can be searched for identification of specific types of image elements and the original frames and video clips in which the image elements appeared can be accessed, reviewed, and used for ancillary purposes.

It may be appreciated that the general global classifier may not be able to classify and label all of the show-specific classes because the image elements are unique to the show being produced or the general ontology was too general. Alternatively, as the SVC process is linear, it will attempt to classify image vectors as associated with the closest pattern it was trained on and thus may mislabel some of the show-specific clusters even if there is not an appropriate corresponding image class in the general global SVC. To address such shortfall, it may be desirable to provide a mechanism to manually refine the labels or tags automatically allocated to show specific classes by the process 1200 of FIG. 12. Alternatively, it may be desirable to perform only a manual labeling of all the classes identified from the daily film footage depending upon the types of images desired for indexing in the film clips and the availability of relevant photo libraries or public domain images. This manual labeling of classes may be conducted as part of post-production using user input, for example, from participants in the production of the film or show.

In order for a user to manually label images elements indexed in the show specific classes, a presentation interface must be created that not only provides a mechanism to view the classified image elements, but that also preferably provides an indication of which classes likely have images worth reviewing and which might be appropriate to ignore. This latter feature of an exemplary presentation interface may be extremely helpful for projects in which thousands of classes have been identified by the indexing process. For example, classes with large numbers of image elements may be more likely to reference an image element of interest (or at least a common across the dailies or the entire shoot), whereas a class with only one or two image elements is likely an outlier and not worth investigating. It may also be helpful to show relationships between classes. For example, if one class is examined and includes desirable image elements for labeling, other classes that appear closely related may also be worth reviewing for labeling purposes.

In one exemplary embodiment, the creation of a network graph of classes may be useful and assist a user in manually labeling show-specific image element classes with a cognizable label. A network graph is a visualization tool that can graphically present how different data (e.g., classes) relate to another by plotting classes as nodes with links or "edges" connecting classes with relationships. Relationships may be determined by commonalities between the data in different nodes. One example of such a relationship in the present context may be a determination of whether image elements appear together in the same frame by comparing frame time stamps associated with feature vectors in each class. For example, if the main character hero is often with a sidekick in certain frames and is often with the villain in other frames, but the sidekick is never with the villain, links may be drawn between hero and sidekick class nodes and between the hero and villain class nodes, but not between the sidekick and villain class nodes.

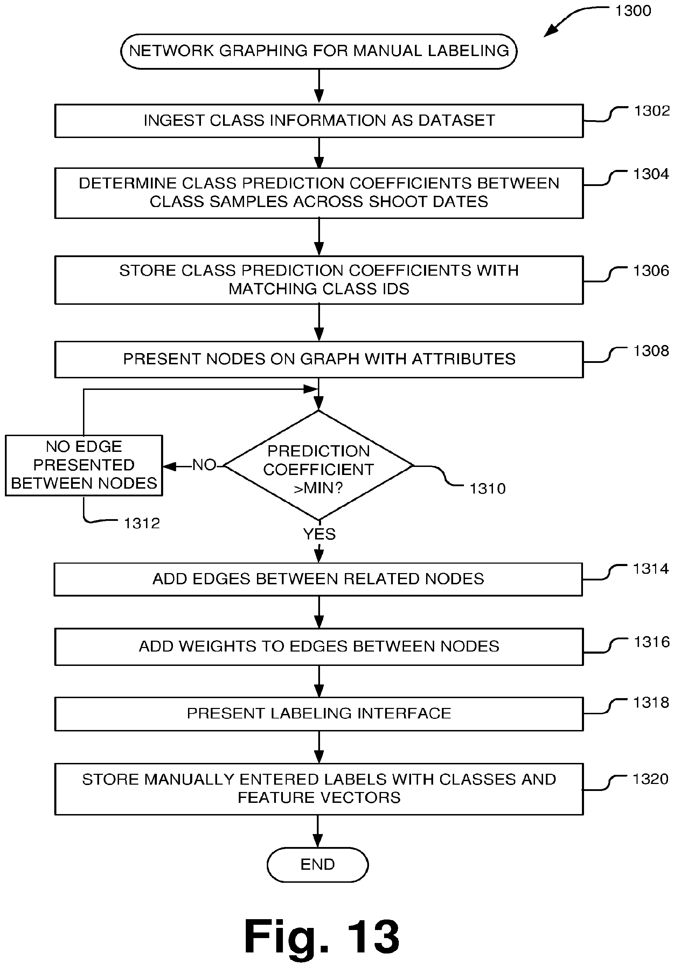

An exemplary method 1300 for preparing and leveraging a network graph for class labeling is depicted in FIG. 13. Initially, a network graph tool e.g., Networkx (http://networkx.github.io) may be instantiated and the desired class information from a shoot may be ingested as the dataset for the network graph as indicated in step 1302. Then, for each shoot date, a classifier (SVC) may be used to predict on feature vectors sampled from classes from other shoot dates as indicated in step 1304. In one exemplary implementation, a maximum of three samples per class is used to reduce the computational requirement. For example, the SVC from Day1 may be loaded into memory, and a sample maximum of three feature vectors each from Day2_ClassA, Day2_ClassB..., Day3_ClassX, ..., etc. may be processed by the Day1 SVC. Positive prediction coefficients for classes are recorded in a database as indicated in step 1306. In this example, each database entry may contain the SVC class ID assigned by the Day1 SVC, a "matching" class ID from another shoot date (i.e., the class ID originally assigned to the feature vector by the SVC from its shoot day), and the prediction coefficient value determined by the Day1 SVC. Note, it may be possible for the same SVC class ID and matching class ID pairs to have different prediction coefficients since the prediction is run on up to three different sampled feature vectors. It is also likely that a given SVC class ID may return a positive prediction coefficient for multiple class IDs across multiple shoot dates. This important feature allows for the creation of a network graph, which shows the connections between class IDs as nodes across different shoot dates as in. Nodes in the network graph are given an attribute of a class ID.

Once the classes to be presented as nodes have been selected, they are presented on a visual display as nodes as indicated in step 1308. It may further be desirable to present information about node attributes on the graph accompanying each of the nodes for consideration by the manual reviewer. Types of attribute information that may be of interest or useful in the decision making process may include, for example, the cluster identifier used as the de facto class label, the shoot date, the frame time stamp that the image element was extracted from, and others. The nodes may be spaced apart from each other on the graph at varying distances. The relative distance between any pair of nodes may reflect the level of similarity between the feature vector values in each of the nodes.

Some nodes may also be linked together by "edges" (e.g., connecting lines) to identify relationships between the classes based upon the prediction coefficients. A determination can be made based upon the strength of the prediction coefficient to determine whether an edge should be drawn as indicated in decision operation 1310. If the prediction coefficient does not exceed the threshold, no edge corresponding to that prediction coefficient is drawn as indicated in step 1312. If there are no links or edges between any two nodes, such indicates that there is no discernable relationship between the nodes at least according to the criteria considered. If the prediction coefficient exceeds the threshold, the nodes may be considered related and an edge may be drawn between the nodes to visually indicate the relationship as indicated in step 1314. The setting of the threshold for the prediction coefficient will result in greater or fewer edges between nodes being presented on the network graph for potential review. For example, for relationship threshold set at 30%, if a class originally classified by a Day1 SVC is assigned a prediction coefficient of > 0.3 by a Day2 SVC with respect to a Day2 class, then an edge will be drawn between the two nodes representing those classes.

As indicated in step 1316, weights may be added to the edges between nodes during the graphing process. The edge may be assigned a weight equal or corresponding to the prediction coefficient. A weight can be as simple as a number depicted along an edge that indicates the perceived strength of a relationship between the classes connected by the edge according to the selected relationship criteria. Such weight information may be helpful to a manual reviewer for determining which clusters to examine for the purposes of labeling. For example, if a reviewer identifies an important image element in a particular node, it may be advisable to review strongly linked nodes for possible labeling due to a higher likelihood of a substantive image element therein.

When a class node is selected for review from the network graph, links to image elements and frames categorized within the class may be accessed and presented to the reviewer for viewing and consideration. A labeling interface may also be presented to the reviewer as indicated in step 1318. If the reviewer decides that the class should be labeled with a cognizable name for later searching the appropriate class name may be entered within the labeling interface and stored in the database as associated with the class, the feature vectors in the class, and the underlying frames from which the image elements corresponding to the feature vectors were extracted as indicated in step 1320. Upon saving the labels, the classes become searchable via text searching to identify frames in the shoot that may be of interest for review and use in collateral activities.

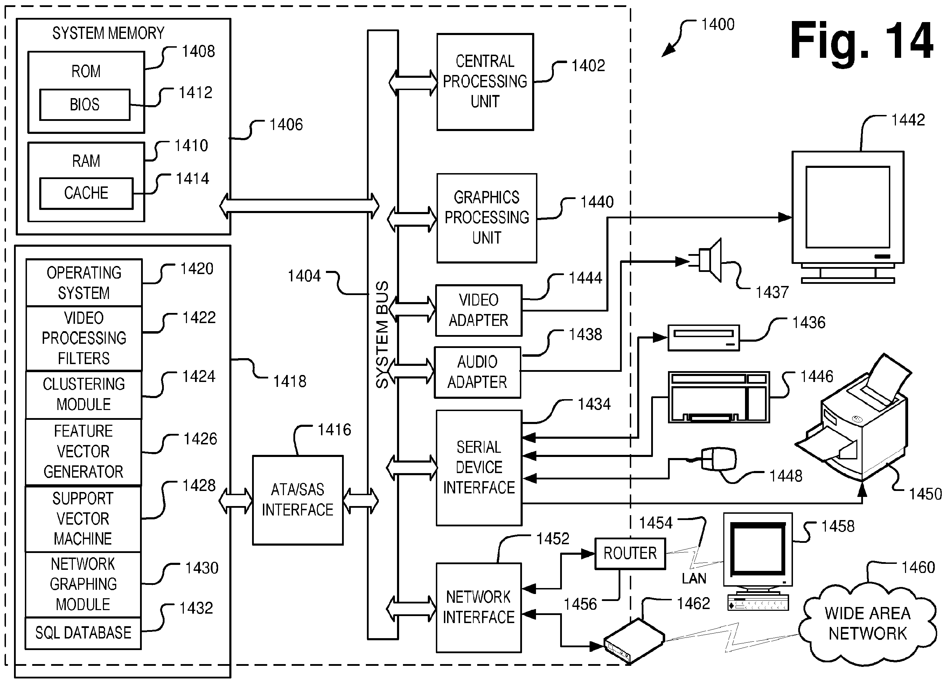

An exemplary computer-implemented image processing and classifying system 1400 for performing the cognitive indexing processes above is depicted in FIG. 14. The image classifying system 1400 may be embodied in a specifically configured, high-performance computing system including a cluster of computing devices in order to provide a desired level of computing power and processing speed. Alternatively, the processes described herein could be implemented on a computer server, a mainframe computer, a distributed computer, a personal computer (PC), a workstation connected to a central computer or server, a notebook or portable computer, an Internet appliance, or other computer devices, or combinations thereof, with internal processing and memory components as well as interface components for connection with external input, output, storage, network, and other types of peripheral devices. Internal components of the image classifying system 1400 in FIG. 14 are shown within the dashed line and external components are shown outside of the dashed line. Components that may be internal or external are shown straddling the dashed line.

In any embodiment or component of the system described herein, the image classifying system 1400 includes one or more processors 1402 and a system memory 1406 connected by a system bus 1404 that also operatively couples various system components. There may be one or more processors 1402, e.g., a single central processing unit (CPU), or a plurality of processing units, commonly referred to as a parallel processing environment (for example, a dual-core, quad-core, or other multi-core processing device). In addition to the CPU, the image classifying system 1400 may also include one or more graphics processing units (GPU) 1440. A GPU 1440 is specifically designed for rendering video and graphics for output on a monitor. A GPU 1440 may also be helpful for handling video processing functions even without outputting an image to a monitor. By using separate processors for system and graphics processing, computers are able to handle video and graphic-intensive applications more efficiently. As noted, the system may link a number of processors together from different machines in a distributed fashion in order to provide the necessary processing power or data storage capacity and access.

The system bus 1404 may be any of several types of bus structures including a memory bus or memory controller, a peripheral bus, a switched-fabric, point-to-point connection, and a local bus using any of a variety of bus architectures. The system memory 1406 includes read only memory (ROM) 1408 and random access memory (RAM) 1410. A basic input/output system (BIOS) 1412, containing the basic routines that help to transfer information between elements within the computer system 1400, such as during start-up, is stored in ROM 1408. A cache 1414 may be set aside in RAM 1410 to provide a high speed memory store for frequently accessed data.

A data storage device 1418 for nonvolatile storage of applications, files, and data may be connected with the system bus 1404 via a device attachment interface 1416, e.g., a Small Computer System Interface (SCSI), a Serial Attached SCSI (SAS) interface, or a Serial AT Attachment (SATA) interface, to provide read and write access to the data storage device 1418 initiated by other components or applications within the image classifying system 1400. The data storage device 1418 may be in the form of a hard disk drive or a solid state memory drive or any other memory system. A number of program modules and other data may be stored on the data storage device 1418, including an operating system 1420, one or more application programs, and data files. In an exemplary implementation, the data storage device 1418 may store various video processing filters 1422, an image clustering module 1424, a feature vector generator 1426, a support vector classifier 1428, a network graphing module 1430, as well as the film and video clips being processed and any other programs, functions, filters, and algorithms necessary to implement the image classifying procedures described herein. The data storage device 1418 may also host a database 1432 (e.g., a SQL database) for storage of video frame time stamps, sampled image set identifiers, other image meta data, cluster identifications, feature vectors, network nodes, and other relational data necessary to perform the image processing and classification procedures described herein. Note that the data storage device 1418 may be either an internal component or an external component of the computer system 1400 as indicated by the hard disk drive 1418 straddling the dashed line in FIG. 14.

In some configurations, the image classifying system 1400 may include both an internal data storage device 1418 and one or more external data storage devices 1436, for example, a CD-ROM/DVD drive, a hard disk drive, a solid state memory drive, a magnetic disk drive, a tape storage system, and/or other storage system or devices. The external storage devices 1436 may be connected with the system bus 1404 via a serial device interface 1434, for example, a universal serial bus (USB) interface, a SCSI interface, a SAS interface, a SATA interface, or other wired or wireless connection (e.g., Ethernet, Bluetooth, 802.11, etc.) to provide read and write access to the external storage devices 1436 initiated by other components or applications within the image classifying system 1400. The external storage device 1436 may accept associated computer-readable media to provide input, output, and nonvolatile storage of computer-readable instructions, data structures, program modules, and other data for the image classifying system 1400.

A display device 1442, e.g., a monitor, a television, or a projector, or other type of presentation device may also be connected to the system bus 1404 via an interface, such as a video adapter 1444 or video card. Similarly, audio devices 1437, for example, external speakers, headphones, or a microphone (not shown), may be connected to the system bus 1404 through an audio card or other audio interface 1438 for presenting audio associated with the film clips during review.

In addition to the display device 1442 and audio device 1437, the image classifying system 1400 may include other peripheral input and output devices, which are often connected to the processor 1402 and memory 1406 through the serial device interface 1434 that is coupled to the system bus 1404. Input and output devices may also or alternately be connected with the system bus 1404 by other interfaces, for example, an IEEE 1494 interface ("Firewire"), a parallel port, or a game port. A user may enter commands and information into the computer system 1400 through various input devices including, for example, a keyboard 1446 and pointing device 1448, for example, a computer mouse. Other input devices (not shown) may include, for example, a joystick, a game pad, a tablet, a touch screen device, a scanner, a facsimile machine, a microphone, a digital camera, and a digital video camera.

Output devices may include a printer 1450. Other output devices (not shown) may include, for example, a plotter, a photocopier, a photo printer, a facsimile machine, and a printing press. In some implementations, several of these input and output devices may be combined into single devices, for example, a printer/scanner/fax/photocopier. In some implementations, an audio device such as a loudspeaker may be connected via the serial device interface 1434 rather than through a separate audio interface.

The image classifying system 1400 may operate in a networked environment using logical connections through a network interface 1452 coupled with the system bus 1404 to communicate with one or more remote devices. The logical connections depicted in FIG. 14 include a local-area network (LAN) 1454 and a wide-area network (WAN) 1460. Such networking environments are commonplace in office networks, home networks, enterprise-wide computer networks, and intranets. These logical connections may be achieved by a communication device coupled to or integral with the image classifying system 1400. As depicted in FIG. 14, the LAN 1454 may use a router 1456 or hub, either wired or wireless, internal or external, to connect with remote devices, e.g., a remote computer 1458, similarly connected on the LAN 1454. The remote computer 1458 may be a personal computer, a server, a client, a peer device, or other common network node, and typically includes many or all of the elements described above relative to the image classifying system 1400.

To connect with a WAN 1460, the image classifying system 1400 typically includes a modem 1462 for establishing communications over the WAN 1460. Typically the WAN 14140 may be the Internet. However, in some instances the WAN 1460 may be a large private network spread among multiple locations, or a virtual private network (VPN). The modem 1462 may be a telephone modem, a high speed modem (e.g., a digital subscriber line (DSL) modem), a cable modem, or similar type of communications device. The modem 1462, which may be internal or external, is connected to the system bus 1418 via the network interface 1452. In alternate embodiments the modem 1462 may be connected via the serial port interface 1444. It should be appreciated that the network connections shown are exemplary and other means of and communications devices for establishing a network communications link between the computer system and other devices or networks may be used.

The technology described herein may be implemented as logical operations and/or modules in one or more computer systems configured for special purpose processing of image frames and pictures to create labeled and searchable classes of image elements during film and television production. The logical operations may be implemented as a sequence of processor-implemented steps directed by software programs executing in one or more computer systems or as interconnected machine or circuit modules within one or more computer systems, or as a combination of both. Likewise, the descriptions of various component modules may be provided in terms of operations executed or effected by the modules. The resulting implementation is a matter of choice, dependent on the performance requirements of the underlying system implementing the described technology. Accordingly, the logical operations making up the embodiments of the technology described herein are referred to variously as operations, steps, objects, or modules. Furthermore, it should be understood that logical operations may be performed in any order, unless explicitly claimed otherwise or a specific order is inherently necessitated by the claim language.

In some implementations, articles of manufacture are provided as computer program products that cause the instantiation of operations on a computer system to implement the invention. One implementation of a computer program product provides a non-transitory computer program storage medium readable by a computer system and encoding a computer program. It should further be understood that the described technology may be employed in special purpose devices independent of a personal computer.

The above specification, examples and data provide a complete description of the structure and use of exemplary embodiments of the invention as defined in the claims. Although various embodiments of the claimed invention have been described above with a certain degree of particularity, or with reference to one or more individual embodiments, those skilled in the art could make numerous alterations to the disclosed embodiments without departing from the spirit or scope of the claimed invention. Other embodiments are therefore contemplated. It is intended that all matter contained in the above description and shown in the accompanying drawings shall be interpreted as illustrative only of particular embodiments and not limiting. Changes in detail or structure may be made without departing from the basic elements of the invention as defined in the following claims.

There follows a set of numbered features defining particular embodiments of the invention. Where a numbered feature refers to one or more earlier numbered features then those features should be considered together in combination.
1. A computer-implemented image classification system comprising
   a storage device configured to ingest and store one or more video files thereon, wherein the one or more video files comprise a plurality of video frames;
   one or more processors configured with instructions to
      identify a subset of the video frames from the one or more video files indicative of substantial motion in context with adjacent video frames;
      separate the subset of the video frames as a sample data set;
      filter the subset of video frames to identify discrete image elements within the video frames;
      segment the image elements from the video frames in the subset of video frames;
      calculate a multi-dimensional feature vector for each image element;
      cluster the feature vectors into a plurality of clusters based upon similarities in feature vector values; and
      process the clusters of feature vectors with a support vector classifier machine to refine clusters into predicted classes.
2. The computer-implemented image classification system of feature 1, wherein the one or more processors are further configured with instructions to remove substantially duplicate video frames from the subset.
3. The computer-implemented image classification system of feature 1, wherein the one or more processors are further configured with instructions to train the support vector classifier machine using one or more groups of feature vectors from the plurality of clusters.
4. The computer-implemented image classification system of feature 3, wherein the one or more processors are further configured with instructions to
   separate the feature vectors in each cluster into one of three groups defined across all the clusters;
   instantiate three support vector classifier machines;
   train each support vector classifier machine on one of the three groups of feature vectors to define predictive classes; and
   for each support vector classifier machine, process feature vectors from two of the three groups not previously used to train the respective support vector classifier machine predictively sort the feature vectors into the predicted classes.
5. The computer-implemented image classification system of feature 4, wherein the one or more processors are further configured with instructions to
   sample a subset of the feature vectors sorted into the predicted classes; and
   train a fourth support vector classifier machine by processing the subset of feature vectors sampled from the predicted classes.
6. The computer-implemented image classification system of feature 1, wherein the one or more processors are further configured with instructions to
   store metadata associated with each of the video frames in the sample data set in a database on the storage device;
   at least temporarily maintain an association in the database between each video frame in the sample data set and the respective image elements segmented from each of the video frames in the sample data set;
   store feature vectors calculated from the image elements in the database on the storage device; and
   record a linked relationship in the database on the storage device between respective feature vectors and the metadata associated with the video frames in the sample set based upon the association of the image elements and the video frames in the sample data set previously maintained.
7. The computer-implemented image classification system of feature 1, wherein the one or more processors are further configured with instructions to
   process the feature vectors in the predicted classes in a general support vector classifier machine previously trained on known images; and
   assign cognizable labels to each of the predicted classes based upon a predictive determination of the general support vector classifier machine of correspondence of the predicted classes to a particular known image.
8. A method implemented in a computer system for indexing and cognizably labeling image elements from a plurality of video frames, wherein one or more processors in the computer system is particularly configured to perform a number of processing steps comprising
   ingesting and storing one or more video files on a storage device within the computer system, wherein the one or more video files comprise the plurality of video frames;
   identifying a subset of the video frames from the one or more video files indicative of substantial motion in context with adjacent video frames;
   separating the subset of the video frames as a sample data set;
   filtering the subset of video frames to identify discrete image elements within the video frames;
   segmenting the image elements from the video frames in the subset of video frames;
   calculating a multi-dimensional feature vector for each image element;
   clustering the feature vectors into a plurality of clusters based upon similarities in feature vector values; and
   processing the clusters of feature vectors with a support vector classifier machine to refine clusters into predicted classes.
9. The method of feature 8, wherein the step of separating the subset of the video frames further comprises removing substantially duplicate video frames from the subset.
10. The method of feature 8 comprising a further step of training the support vector classifier machine using one or more groups of feature vectors from the plurality of clusters.
11. The method of feature 10 comprising further steps of
   separating the feature vectors in each cluster into one of three groups defined across all the clusters;
   instantiating three support vector classifier machines;
   training each support vector classifier machine on one of the three groups of feature vectors to define predictive classes; and
   for each support vector classifier machine, processing feature vectors from two of the three groups not previously used to train the respective support vector classifier machine predictively sort the feature vectors into the predicted classes.
12 The method of feature 11 comprising further steps of
   sampling a subset of the feature vectors sorted into the predicted classes; and
   training a fourth support vector classifier machine by processing the subset of feature vectors sampled from the predicted classes.
13. The method of feature 8 comprising further steps of
   storing metadata associated with each of the video frames in the sample data set in a database;
   at least temporarily maintaining an association in the database between each video frame in the sample data set and the respective image elements segmented from each of the video frames in the sample data set;
   storing feature vectors calculated from the image elements in the database; and
   recording a linked relationship in the database between respective feature vectors and the metadata associated with the video frames in the sample set based upon the association of the image elements and the video frames in the sample data set previously maintained.
14. The method of feature 8 comprising further steps of
   processing the feature vectors in the predicted classes in a general support vector classifier machine previously trained on known images; and
   assigning cognizable labels to each of the predicted classes based upon a predictive determination of the general support vector classifier machine of correspondence of the predicted classes to a particular known image.
15. A non-transitory computer readable storage medium containing instructions for instantiating a special purpose computer to index and cognizably label image elements from a plurality of video frames, wherein the instructions implement a computer process comprising the steps of
   ingesting and storing one or more video files on a storage device within a computer system, wherein the one or more video files comprise the plurality of video frames;
   identifying a subset of the video frames from the one or more video files indicative of substantial motion in context with adjacent video frames;
   separating the subset of the video frames as a sample data set;
   filtering the subset of video frames to identify discrete image elements within the video frames;
   segmenting the image elements from the video frames in the subset of video frames;
   calculating a multi-dimensional feature vector for each image element;
   clustering the feature vectors into a plurality of clusters based upon similarities in feature vector values; and
   processing the clusters of feature vectors with a support vector classifier machine to refine clusters into predicted classes.
16. The non-transitory computer readable storage medium of feature 15, wherein the instructions implement a further process step comprising separating the subset of the video frames further comprises removing substantially duplicate video frames from the subset.
17. The non-transitory computer readable storage medium of feature 15, wherein the instructions implement a further process step comprising training the support vector classifier machine using one or more groups of feature vectors from the plurality of clusters.
18. The non-transitory computer readable storage medium of feature 17, wherein the instructions implement further process steps comprising
   separating the feature vectors in each cluster into one of three groups defined across all the clusters;
   instantiating three support vector classifier machines;
   training each support vector classifier machine on one of the three groups of feature vectors to define predictive classes; and
   for each support vector classifier machine, processing feature vectors from two of the three groups not previously used to train the respective support vector classifier machine predictively sort the feature vectors into the predicted classes.
19. The non-transitory computer readable storage medium of feature 18, wherein the instructions implement further process steps comprising
   sampling a subset of the feature vectors sorted into the predicted classes; and
   training a fourth support vector classifier machine by processing the subset of feature vectors sampled from the predicted classes.
20. The non-transitory computer readable storage medium of feature 15, wherein the instructions implement further process steps comprising
   storing metadata associated with each of the video frames in the sample data set in a database;
   at least temporarily maintaining an association in the database between each video frame in the sample data set and the respective image elements segmented from each of the video frames in the sample data set;
   storing feature vectors calculated from the image elements in the database; and
   recording a linked relationship in the database between respective feature vectors and the metadata associated with the video frames in the sample set based upon the association of the image elements and the video frames in the sample data set previously maintained.
21. The non-transitory computer readable storage medium of feature 15, wherein the instructions implement further process steps comprising
   processing the feature vectors in the predicted classes in a general support vector classifier machine previously trained on known images; and
   assigning cognizable labels to each of the predicted classes based upon a predictive determination of the general support vector classifier machine of correspondence of the predicted classes to a particular known image.

## Claims

1. A computer-implemented image classification system comprising
a storage device configured to ingest and store one or more video files thereon, wherein the one or more video files comprise a plurality of video frames;
one or more processors configured with instructions to
identify a subset of the video frames from the one or more video files indicative of substantial motion in context with adjacent video frames;
separate the subset of the video frames as a sample data set;
filter the subset of video frames to identify discrete image elements within the video frames;
segment the image elements from the video frames in the subset of video frames;
calculate a multi-dimensional feature vector for each image element;
cluster the feature vectors into a plurality of clusters based upon similarities in feature vector values; and
process the clusters of feature vectors with a support vector classifier machine to refine clusters into predicted classes.

2. The computer-implemented image classification system of claim 1, wherein the one or more processors are further configured with instructions to remove substantially duplicate video frames from the subset.

3. The computer-implemented image classification system of claims 1 or 2, wherein the one or more processors are further configured with instructions to train the support vector classifier machine using one or more groups of feature vectors from the plurality of clusters.

4. The computer-implemented image classification system of claim 3, wherein the one or more processors are further configured with instructions to
separate the feature vectors in each cluster into one of three groups defined across all the clusters;
instantiate three support vector classifier machines;
train each support vector classifier machine on one of the three groups of feature vectors to define predictive classes; and
for each support vector classifier machine, process feature vectors from two of the three groups not previously used to train the respective support vector classifier machine predictively sort the feature vectors into the predicted classes.

5. The computer-implemented image classification system of claim 4, wherein the one or more processors are further configured with instructions to
sample a subset of the feature vectors sorted into the predicted classes; and
train a fourth support vector classifier machine by processing the subset of feature vectors sampled from the predicted classes.

6. The computer-implemented image classification system of any of the preceding claims, wherein the one or more processors are further configured with instructions to
store metadata associated with each of the video frames in the sample data set in a database on the storage device;
at least temporarily maintain an association in the database between each video frame in the sample data set and the respective image elements segmented from each of the video frames in the sample data set;
store feature vectors calculated from the image elements in the database on the storage device; and
record a linked relationship in the database on the storage device between respective feature vectors and the metadata associated with the video frames in the sample set based upon the association of the image elements and the video frames in the sample data set previously maintained.

7. The computer-implemented image classification system of any of the preceding claims, wherein the one or more processors are further configured with instructions to
process the feature vectors in the predicted classes in a general support vector classifier machine previously trained on known images; and
assign cognizable labels to each of the predicted classes based upon a predictive determination of the general support vector classifier machine of correspondence of the predicted classes to a particular known image.

8. A method implemented in a computer system for indexing and cognizably labeling image elements from a plurality of video frames, wherein one or more processors in the computer system is particularly configured to perform a number of processing steps comprising
ingesting and storing one or more video files on a storage device within the computer system, wherein the one or more video files comprise the plurality of video frames;
identifying a subset of the video frames from the one or more video files indicative of substantial motion in context with adjacent video frames;
separating the subset of the video frames as a sample data set;
filtering the subset of video frames to identify discrete image elements within the video frames;
segmenting the image elements from the video frames in the subset of video frames;
calculating a multi-dimensional feature vector for each image element;
clustering the feature vectors into a plurality of clusters based upon similarities in feature vector values; and
processing the clusters of feature vectors with a support vector classifier machine to refine clusters into predicted classes.

9. The method of claim 8, wherein the step of separating the subset of the video frames further comprises removing substantially duplicate video frames from the subset.

10. The method of claims 8 or 9, comprising a further step of training the support vector classifier machine using one or more groups of feature vectors from the plurality of clusters.

11. The method of claim 10 comprising further steps of
separating the feature vectors in each cluster into one of three groups defined across all the clusters;
instantiating three support vector classifier machines;
training each support vector classifier machine on one of the three groups of feature vectors to define predictive classes; and
for each support vector classifier machine, processing feature vectors from two of the three groups not previously used to train the respective support vector classifier machine predictively sort the feature vectors into the predicted classes.

12. The method of claim 11 comprising further steps of
sampling a subset of the feature vectors sorted into the predicted classes; and
training a fourth support vector classifier machine by processing the subset of feature vectors sampled from the predicted classes.

13. The method of any of claims 8 to 12, comprising further steps of
storing metadata associated with each of the video frames in the sample data set in a database;
at least temporarily maintaining an association in the database between each video frame in the sample data set and the respective image elements segmented from each of the video frames in the sample data set;
storing feature vectors calculated from the image elements in the database; and
recording a linked relationship in the database between respective feature vectors and the metadata associated with the video frames in the sample set based upon the association of the image elements and the video frames in the sample data set previously maintained.

14. The method of any of claims 8 to 13, comprising further steps of
processing the feature vectors in the predicted classes in a general support vector classifier machine previously trained on known images; and
assigning cognizable labels to each of the predicted classes based upon a predictive determination of the general support vector classifier machine of correspondence of the predicted classes to a particular known image.

15. A non-transitory computer readable storage medium containing instructions for instantiating a special purpose computer to index and cognizably label image elements from a plurality of video frames, wherein the instructions implement a computer process comprising the steps of any of claims 8 to 14.
